# DEMANDE DE BREVET EUROPEEN

(11) **EP 4 203 117 A1**
(43) Date de publication de la demande: **28.06.2023**
(21) Numéro de dépôt: 22215509.5
(22) Date de dépôt: 21.12.2022
(51) Int. Cl.: H01M 8/0223, H01M 8/0247, H01M 8/0258, H01M 8/0267, H01M 8/0276, H01M 8/0284, H01M 8/0286, H01M 8/10

(54) **JOINT D'ÉTANCHÉITÉ POUR RÉACTEUR ÉLECTROCHIMIQUE ET PROCÉDÉ DE FABRICATION ASSOCIÉ**

(30) Priorité: 23.12.2021 FR 2114388
(71) Demandeur: Commissariat à l'énergie atomique et aux énergies alternatives, 75015 Paris (FR)
(72) Inventeur: TREMBLAY, Denis, 38054 GRENOBLE Cedex 09 (FR); BLACHOT, Jean-François, 38054 GRENOBLE Cedex 09 (FR)
(74) Mandataire: Hautier IP

(57) **Abrégé**

La présente invention concerne un substrat 10 comprenant une première face 101 sur laquelle s'étend un premier guide d'écoulement 1 pour réacteur électrochimique ou un substrat 10 comprenant une première face 101 destinée à être mise en regard d'un premier guide d'écoulement 1 d'une plaque 20 pour réacteur électrochimique. Le substrat comprend, sur sa première face, un joint d'étanchéité 50 autour d'une zone dite zone d'intérêt 1000 de la première face qui est destinée à être étanchéifiée. Le substrat comprend en outre au moins deux premières nervures 71 et 72 configurées de sorte à former au moins une gorge dans laquelle le joint d'étanchéité 50 s'étend, ledit joint d'étanchéité présentant une épaisseur strictement supérieure aux épaisseurs des premières nervures. La présente invention concerne également un procédé de fabrication d'un tel substrat.

## Description

### DOMAINE TECHNIQUE

La présente invention concerne l'optimisation de la fabrication d'au moins un composant d'un réacteur électrochimique tel qu'une pile à combustible et ledit au moins un composant associé. Elle concerne plus particulièrement l'étanchéification de circuits fluidiques pour réacteurs électrochimiques par exemple destinés à une utilisation en tant que piles à combustible, et en particulier à une utilisation en tant que piles à combustible de température inférieure à 250°C.

### ETAT DE LA TECHNIQUE

Les piles à combustible sont par exemple envisagées comme système d'alimentation électrique pour des véhicules automobiles destinés à être produits à grande échelle dans le futur, ainsi que pour un grand nombre d'autres applications. Une pile à combustible est un dispositif électrochimique qui convertit de l'énergie chimique directement en énergie électrique. Un combustible tel que du dihydrogène ou du méthanol est utilisé comme carburant de la pile à combustible.

Les piles à combustible à membrane échangeuse de protons, dites PEM, fonctionnent à basse température, typiquement inférieure à 250°C et présentent des propriétés de compacité particulièrement intéressantes.

### Principe de la pile à combustible

La pile à combustible est un générateur électrochimique qui permet de convertir de l'énergie chimique en énergie électrique par une réaction d'oxydo-réduction.

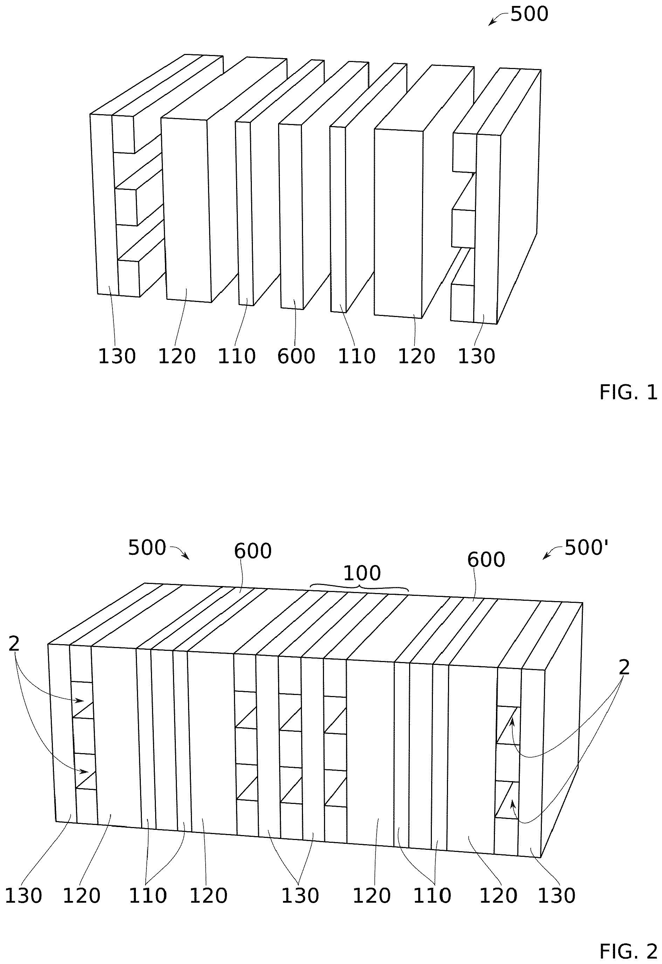

En référence à la figure 1 annexée, le coeur électrochimique 500 de la pile est constitué de deux électrodes 110 séparées par une membrane échangeuse d'ions 600. Les électrodes 110 sont alimentées d'un réactif approprié, respectivement un combustible pour l'anode et un comburant pour la cathode, créant ainsi une réaction électrochimique à la surface des électrodes 110 qui va permettre de générer le courant électrique.

En référence à la figure 2, la pile à combustible peut être constituée d'un empilement de coeurs électrochimiques 500, 500' montés en série ; un tel empilement est couramment appelé « stack ». Entre chaque empilement de coeurs électrochimiques 500, 500' peut être constituée une plaque bipolaire 100 pour permettre d'alimenter les électrodes 110 en réactifs. La pile à combustible peut donc être constituée d'un empilement de cellules unitaires séparées deux à deux par une plaque bipolaire 100.

Plus particulièrement, une pile à combustible à membrane échangeuse de protons ou PEMFC (de l'acronyme anglo-saxon « Proton Exchange Membrane Fuel Cell ») comprend au moins une cellule unitaire contenant un assemblage membrane-électrodes ou AME (110/600/110), constitué d'une membrane électrolytique 600 permettant le passage sélectif des protons et, de part et d'autre de cette membrane 600, les électrodes 110.

La membrane 600 est généralement constituée d'un ionomère perfluorosulfoné tel que le Nation^{®}. Les électrodes 110, également appelées couches catalytiques ou actives, contiennent un catalyseur, avantageusement du platine (Pt), supporté par du carbone, et éventuellement un ionomère, en général le même que celui constituant la membrane 600.

Au niveau de l'anode, du dihydrogène (H2), utilisé comme carburant, est oxydé pour produire des protons traversant la membrane 600. Les électrons produits par cette réaction migrent vers le circuit fluidique, puis traversent un circuit électrique externe à la cellule 500 pour former un courant électrique. Au niveau de la cathode, de l'oxygène (O2) est réduit et réagit avec les protons ayant traversé la membrane 600 pour former de l'eau.

Des couches de diffusion gazeuse 120 ou GDL (de l'acronyme anglo-saxon « Gaz Diffusion Layer»), classiquement en fibres de graphite, peuvent être interposées entre les électrodes 110 et les plaques bipolaires 100.

### Principe d'une plaque bipolaire

La plaque bipolaire 100 assure plusieurs fonctions, parmi lesquelles notamment :
- la distribution des réactifs et l'évacuation des sous-produits formés, possiblement via des canaux 2 et/ou orifices ménagés en son sein;
- le transfert des électrons générés au niveau des anodes des différentes cellules unitaires 500, ce qui implique que la plaque bipolaire 100 soit électriquement conductrice ;
- le refroidissement des cellules unitaires 500, possiblement via la circulation d'un liquide de refroidissement en son sein ;
- un support mécanique pour le coeur électrochimique 500.

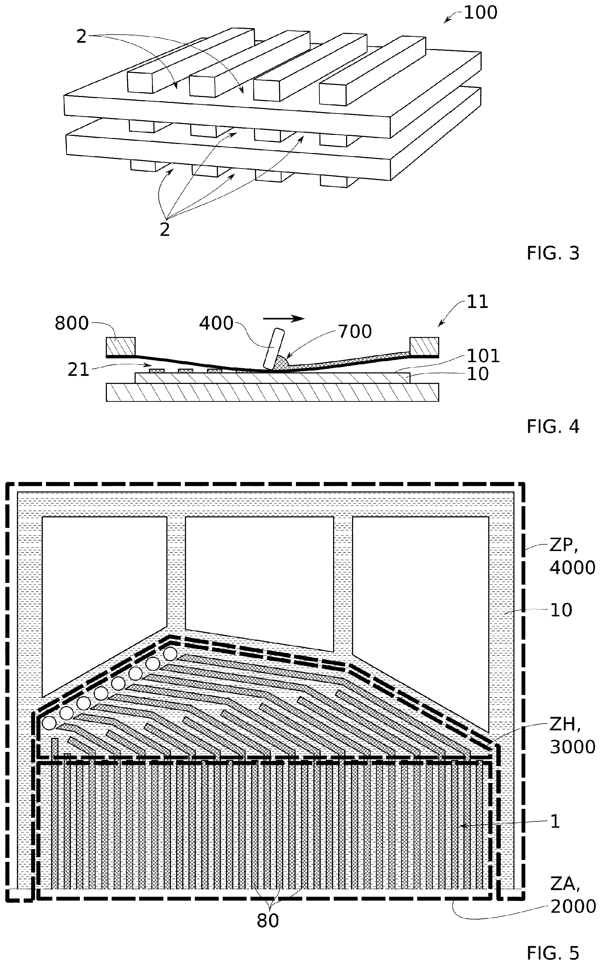

On peut considérer le cas typique d'une plaque bipolaire 100 telle que schématiquement illustrée sur la figure 3 comprenant trois circuits fluidiques, dédiés respectivement au guidage des écoulements de fluide anodique, de fluide cathodique et de fluide de refroidissement (au centre de la plaque). Le guidage des écoulements est réalisé via la mise en place d'obstacles, appelées ci-dessous nervures ou dents, comme des parois ou des plots, qui influent sur l'écoulement du fluide. Ces nervures peuvent prendre la forme, par exemple, d'un faisceau de canaux 2 parallèles, que l'on nomme ici « circuit fluidique ». Ces nervures réalisant la connexion électrique et thermique avec le coeur de pile, elles doivent être électriquement conductrices.

Chaque circuit fluidique d'une pile à combustible est généralement constitué d'un matériau conducteur de courant qui peut être du graphite, un plastique à renfort de fibres de carbone, ou bien un métal, tel que l'acier inoxydable, un alliage métallique ou tout autre matériau conducteur de courant. Les fluides cathodique et anodique sont distribués sur toute la surface active de chaque électrode par les canaux 2 des circuits fluidiques, chaque circuit fluidique comprenant une entrée pour permettre l'amenée du fluide et une sortie pour permettre l'évacuation du fluide non réactif et des sous-produits des réactions électrochimiques.

D'autres agencements des circuits fluidiques que celui illustré schématiquement sur la figure 3 sont possibles. Par exemple, une plaque bipolaire 100 peut comprendre seulement deux circuits fluidiques, dédiés respectivement à chacun des deux réactifs. Par ailleurs, une plaque bipolaire 100 comprenant deux ou trois circuits fluidiques peut être constituée de plusieurs sous-ensembles disjoints, comprenant chacun au moins un circuit fluidique. Une plaque bipolaire 100 présentant les fonctions décrites précédemment est alors formée au moment de l'assemblage de la pile, lorsque les cellules sont empilées et qu'un effort de compression leur est appliqué.

### Fabrication d'un circuit fluidique par usinage ou formage

Les canaux 2 du circuit fluidique, conçus pour contrôler la perte de charge des écoulements qui y circulent, sont encore à ce jour principalement réalisés par usinage ou formage (par exemple par emboutissage) à partir d'une plaque électriquement conductrice 130. Dans le premier cas, la matière est enlevée et, dans le second cas, les canaux 2 sont créés par déformation de la plaque électriquement conductrice 130.

Plus particulièrement, chaque circuit fluidique utilisé dans la pile à combustible à membrane échangeuse de protons est principalement réalisé à partir de métal embouti. Généralement, l'épaisseur de la plaque électriquement conductrice 130 est comprise entre 0,1 et 0,4 mm et les canaux 2 ont de préférence une largeur comprise entre 0,2 et 2 mm, une profondeur comprise entre 0,2 et 0,5 mm, et un espacement (ou largeur de dent) compris entre 0,2 et 2 mm. La surface de diffusion des fluides est variable en fonction de la dimension de la pile et de la puissance souhaitée. Pour les applications de forte puissance, un circuit de refroidissement des fluides est généralement inséré entre les canaux de diffusion de l'hydrogène à l'anode et les canaux de diffusion de l'oxygène (ou de l'air) à la cathode. L'empilement de circuits fluidiques sur deux niveaux, voire sur trois niveaux (comme représenté sur la figure 3), forme une plaque bipolaire 100.

Néanmoins, le circuit fluidique obtenu par emboutissage de tôle métallique présente certains inconvénients, parmi lesquels notamment :
- un procédé de réalisation compliqué et un coût de production qui reste encore élevé, en particulier pour de faibles volumes de production ;
- le bombé de la plaque bipolaire 100 occasionné par le formage qui rend compliqué le dépôt du ou des joints d'étanchéité pour garantir l'étanchéité de la cellule 500 ;
- la difficulté pour diminuer encore l'épaisseur de la plaque bipolaire 100 et son poids, déjà très optimisés, qui impactent fortement la densité d'énergie volumique et massique de la pile à combustible ; et
- la difficulté pour diminuer la largeur des canaux 2 afin d'améliorer les performances de la pile, du fait des limites de formage des tôles utilisées.

### Différentes zones d'une plaque bipolaire

En référence à la figure 5, une plaque bipolaire 100 peut comprendre trois zones différentes entre elles :
- une zone active (ZA) 2000, par exemple en contact avec la GDL 120,
- une zone d'homogénéisation (ZH) 3000, typiquement disposée en appui sur un renfort de l'assemblage membrane-électrodes ou AME, et
- une zone périphérique (ZP) 4000 qui est conçue pour assurer l'étanchéité entre les différents fluides destinés à circuler au sein de la plaque bipolaire 100, et plus généralement au sein du réacteur électrochimique.

Toujours en référence à la figure 5, les zones active ZA et d'homogénéisation ZH comprennent les nervures (ou dents) 80 susmentionnées pour former un guide d'écoulement 1. Par ailleurs, notamment en zone périphérique (ZP), un joint d'étanchéité 55 peut être prévu qui entoure, de préférence entièrement, le guide d'écoulement 1.

### Etanchéité des circuits fluidiques

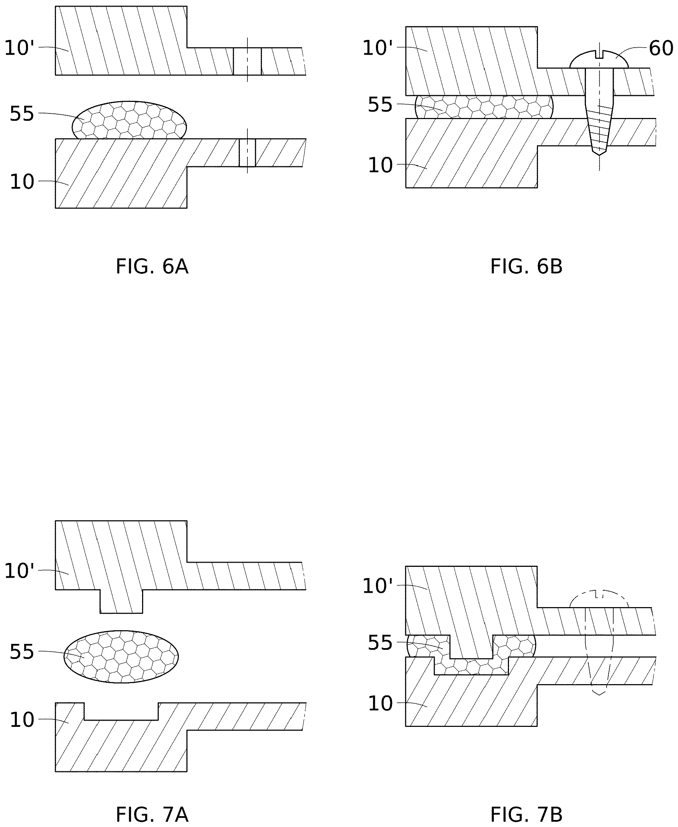

Lors de l'empilement de cellules 500, d'une PEMFC en particulier, les deux ou trois réseaux fluidiques (hydrogène, air, voire refroidissement) doivent être complètement étanches (entre eux et relativement à l'extérieur des cellules). Des joints sont utilisés pour assurer ces étanchéités. Plusieurs types de joints d'étanchéité, et de dépôts, peuvent être utilisés. On distingue notamment deux types de technologie d'étanchéification :
- La technologie CIPG (pour « Cured In Place Gasket » selon la terminologie anglo-saxonne) par laquelle un élastomère 55 et déposé qui adhère sur une face d'un substrat 10 (Cf. figure 6A), et l'étanchéité est obtenue, entre le substrat 10 et un second substrat 10' venant en vis-à-vis, par compression de l'élastomère 55 déposé, au moyen d'une fixation mécanique, par exemple au moyen d'une vis 60 (Cf. figure 6B) ; il s'agit donc d'une étanchéité sous contrainte, et
- La technologie FIPG (pour « Formed In Place Gasket » selon la terminologie anglo-saxonne) où l'élastomère 55 adhère aux deux faces des substrats 10 et 10' assemblés, et les substrats deviennent par conséquent solidaires l'un de l'autre ; il s'agit donc d'une étanchéité par collage (Cf. Figures 7A et 7B), une rugosité des surfaces à coller entre elles, et impliquant par exemple une nervure dite d'accroche 56 telle que représentée sur les figures 7A et 7B, pouvant être avantageusement prévue notamment pour augmenter la surface de collage.

Ces deux technologies d'étanchéification ont chacune leurs avantages et leurs inconvénients.

La technologie CIPG présente les avantages de permettre un assemblage démontable et la fabrication de joints d'étanchéité 55 présentant des épaisseurs satisfaisantes. En revanche, elle présente les inconvénients de nécessiter une fixation mécanique 60, un contrôle du taux de compression et une vigilance quant à la dilatation thermique différentielle, ainsi que l'inconvénient de ne pas tolérer les surfaces rugueuses.

La technologie FIPG présente les avantages d'assurer à la fois l'étanchéité et le collage, relâchant par-là la nécessité d'une fixation mécanique qui devient optionnelle, de ne pas nécessiter un contrôle du taux de compression, de supporter la dilatation thermique différentielle et de tolérer les surfaces rugueuses. En revanche, elle présente les inconvénients de ne permettre que la fabrication de montages indémontables et de nécessiter une attention particulière quant à l'épaisseur des joints d'étanchéité 55 qu'elle permet de fabriquer.

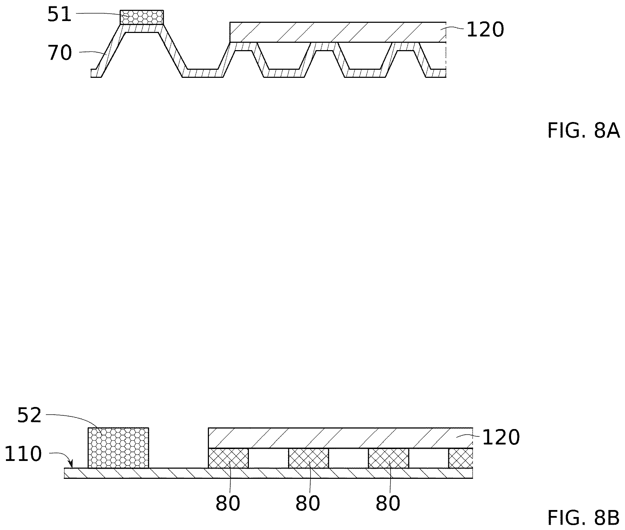

Historiquement, sur une plaque bipolaire emboutie, la solution CIPG est préférée de manière à pouvoir récupérer, lors du démontage, la plaque bipolaire et/ou l'AME. Classiquement, et en référence à la figure 8A, un joint plat d'élastomère 51 est posé sur des nervures périphériques 70 issues de l'emboutissage. Une autre solution est de venir imprimer le joint directement sur ces nervures. D'autres solutions peuvent encore être utilisées :
- Le joint (type silicone) peut être déposé par sérigraphie sur le renfort de l'AME, comme décrit dans le document de brevet FR 3045949 A1, ou
- Le joint peut être déposé par sérigraphie sur la plaque bipolaire comme décrit dans le document de brevet US 2004/0101735 A1.

Par ailleurs, parmi les derniers documents de brevet relatifs à la technologie FIPG, l'on peut citer :
- Le document de brevet US 6,399,234 B2 décrivant une fusion à chaud d'un film thermoplastique pour permettre le collage entre l'AME et la plaque bipolaire,
- Les documents de brevet CN 111497427 A et CN 101632978 A qui décrivent un procédé de collage de demi-plaques entre elles par dépôt de colle par sérigraphie, mais qui ne concernent que l'étanchéité du circuit de refroidissement, et
- Le document de brevet WO 2005/101554 A1 qui décrit l'emploi d'un adhésif pour coller la plaque bipolaire à l'AME.

### Réalisation de circuits fluidiques imprimés

Afin de simplifier le procédé de fabrication et diminuer le coût des plaques bipolaires 100, qui représente approximativement 40% du coût total de la pile à combustible, les solutions mises en oeuvre dans l'art antérieur ont notamment consisté à réaliser les obstacles à l'écoulement par impression sur un substrat plan métallique ou composite pour former un guide d'écoulement, puis la plaque bipolaire à partir d'au moins deux guides d'écoulement. Ce procédé permet, en variante, de réaliser le circuit fluidique sur la couche de diffusion gazeuse 120, en dehors de la plaque bipolaire 100.

En référence à la figure 4, l'impression de circuits fluidiques conducteurs est aujourd'hui avantageusement réalisée grâce à l'utilisation d'un masque de sérigraphie 11 contenant l'image du circuit fluidique à imprimer. On fait passer une encre conductrice 700 à thixotropie très élevée à travers ce masque 11 et l'impression permet de déposer des motifs 21 de nervures, appelées aussi dents, sur la face 101 d'un substrat 10, de sorte à obtenir un circuit fluidique conducteur.

Plus particulièrement, la sérigraphie par écran maillé (désigné par mesh en langue anglaise) est basée sur l'utilisation d'un masque ou écran 11 constitué de deux composants principaux : un maillage (« mesh ») et une émulsion. Le maillage, tendu à l'intérieur d'un cadre 800, est le support mécanique de l'écran 11. Sa porosité est définie pour qu'il puisse être facilement traversé par l'encre. L'émulsion est un dépôt réalisé sur le maillage, et imprégnant le maillage à l'endroit de son dépôt, de manière à former une couche étanche à l'encre 700. Les vides présents dans cette couche d'émulsion sont destinés à être remplis par l'encre 700 au moment de la sérigraphie. L'épaisseur de la couche d'émulsion détermine en grande partie l'épaisseur de la couche d'encre déposée.

Cela fait maintenant plusieurs années que l'impression par sérigraphie est utilisée pour fabriquer des circuits fluidiques conducteurs destinés à une utilisation en PEMFC. Différents documents de brevet ont fourni des descriptions plus ou moins détaillées des possibilités d'impression des dents en termes de hauteur et de largeur. Des informations ont aussi été données sur la nature (solvant, matériau conducteur, ...) et les propriétés (viscosité, seuil d'écoulement, ...) des encres utilisées pour réaliser ces circuits fluidiques.

Les dents imprimées doivent assurer le passage de très haute densité de courant ; elles doivent être par conséquent très conductrices. De manière générale, la résistivité d'une plaque bipolaire 100 ne doit pas dépasser 10 mOhm.cm².

Dans la pratique, il est particulièrement complexe de formuler une encre à la fois très conductrice et permettant d'obtenir des facteurs de forme des dents (rapport entre hauteur et largeur) élevés.

En effet, pour atteindre les facteurs de forme des dents recherchés, le choix pour la formulation de l'encre est fortement restreint en terme de :
- nature de liant,
- taux de liant (qui doit être élevé pour conférer à l'encre une haute thixotropie),
- solvant utilisé, et
- choix du procédé de dépôt.

Comme illustré sur la figure 3, une plaque bipolaire 100 comprend au moins deux guides d'écoulement situés de part et d'autre d'un feuillard, souvent en acier inoxydable. Notamment, le circuit fluidique du liquide de refroidissement peut donc être à imprimer au dos de l'un parmi le circuit fluidique du carburant (H₂) ou le circuit fluidique de l'oxydant (O₂), ou inversement.

### Etanchéité des circuits fluidiques imprimés

Dans le cadre de plaques bipolaires 100 avec réseaux fluidiques imprimés, il est intéressant d'imprimer le joint d'étanchéité en zone périphérique (ZP) pour gagner en simplicité de procédé de fabrication et en coût de matière. En effet, contrairement à une fabrication du joint par impression, les solutions antérieures basées sur l'utilisation de joints d'étanchéité plats, de films thermoplastiques, ou d'adhésifs, sont couteuses car elles occasionnent des pertes de matière au travers de rebuts de découpe, du fait de la forme spécifique du joint. La réalisation du joint d'étanchéité par sérigraphie est donc souhaitable au moins de ce point de vue. Toutefois, elle se heurte à la difficulté suivante : l'épaisseur et le facteur de forme du joint à imprimer en zone périphérique (ZP) sont bien plus importants dans le cas d'une impression par sérigraphie, relativement auxdites solutions antérieures, du fait qu'aucune nervure d'emboutissage 70 n'est présente sur la plaque bipolaire 100. Effectivement, comme l'illustre la figure 8B, qui est à considérer en comparaison de la figure 8A, l'épaisseur de la couche 52 de matériau d'étanchéité à imprimer doit correspondre à la somme de la hauteur des dents 80 imprimées en zone active 2000 et de la GDL 120 comprimée, pour présenter une même épaisseur que celle constituée en figure 8A de la hauteur de la nervure d'emboutissage 70 et du joint plat 51. Ladite somme pouvant atteindre sensiblement 400 µm, l'on comprend que la réalisation par sérigraphie du joint d'étanchéité est pour le moins difficile.

De telles impressions de joints d'étanchéité sont en effet difficilement réalisables avec les viscosités des pâtes ou des résines commerciales, car leurs dépôts ont tendance à s'affaisser après leurs impressions, du moins pour des impressions visant à atteindre l'épaisseur et le facteur de forme souhaités.

De plus, lors du montage de la cellule 500, on peut par exemple choisir de coller l'AME à la plaque bipolaire par pressage entre eux. Dans ce cas, il est primordial que la matière 52 déposée, destinée à former le joint d'étanchéité, reste en place, lors du pressage des deux éléments l'un contre l'autre.

Un objet de la présente invention est donc de proposer une nouvelle solution d'étanchéification des circuits fluidiques pour réacteur électrochimique.

Un objet de la présente invention est donc plus particulièrement de proposer un procédé de fabrication d'au moins un joint d'étanchéité pour un réacteur électrochimique qui permette de pallier au moins un inconvénient des solutions connues et, plus particulièrement, qui permette d'atteindre l'épaisseur et/ou le facteur de forme désiré(s) pour le joint.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, un premier aspect de l'invention concerne un substrat comprenant une première face sur laquelle s'étend, ou est destiné à s'étendre, au moins un premier guide d'écoulement pour réacteur électrochimique ou un substrat comprenant une première face destinée à être mise en regard d'un premier guide d'écoulement d'une plaque pour réacteur électrochimique, le substrat comprenant, sur sa première face, au moins un joint d'étanchéité autour d'au moins une zone, dite zone d'intérêt, de la première face qui est destinée à être étanchéifiée, le substrat étant caractérisé en ce qu'il comprend en outre au moins deux premières nervures configurées de sorte à former au moins une gorge dans laquelle ledit au moins un joint d'étanchéité s'étend, ledit joint d'étanchéité présentant une épaisseur strictement supérieure à l'épaisseur d'au moins une des deux premières nervures, de préférence strictement supérieure aux épaisseurs des premières nervures.

Un deuxième aspect de l'invention concerne une plaque bipolaire pour réacteur électrochimique, et en particulier pour pile à combustible à membrane échange de protons, comprenant un substrat selon le premier aspect de l'invention, ou un réacteur électrochimique, comprenant un substrat selon le premier aspect de l'invention ou une plaque bipolaire selon le deuxième aspect de l'invention.

Un troisième aspect de l'invention concerne un procédé de fabrication d'au moins un joint d'étanchéité pour réacteur électrochimique, comprenant les étapes suivantes :
- fournir un substrat comprenant une première face sur laquelle s'étend, ou est destiné à s'étendre, au moins un premier guide d'écoulement, ou un substrat comprenant une première face destinée à être mise en regard d'au moins un premier guide d'écoulement d'une plaque pour réacteur électrochimique,
- déposer, sur la première face du substrat, autour d'au moins une zone, dite zone d'intérêt, destinée à être étanchéifiée, au moins deux premières nervures configurées pour former, entre elles, au moins une gorge, puis
- déposer, dans chaque gorge, une couche à base d'un matériau d'étanchéité, de sorte que ladite couche présente une épaisseur strictement supérieure à une épaisseur des premières nervures,
de sorte à former au moins un joint d'étanchéité épousant la forme de la gorge dans laquelle il s'étend et présentant une épaisseur strictement supérieure à celles des premières nervures.

Un quatrième aspect de l'invention concerne un procédé de fabrication d'une plaque bipolaire pour réacteur électrochimique ou d'un réacteur électrochimique comprenant la mise en oeuvre du procédé de fabrication d'un joint d'étanchéité selon le troisième aspect de l'invention.

Ainsi, l'invention repose sur une utilisation novatrice de premières nervures qui définissent entre elles une gorge comme un négatif d'une partie au moins de la forme du joint d'étanchéité à fabriquer. Avoir recours à de telles premières nervures est une alternative avantageuse aux techniques actuellement utilisées. En effet, grâce à chaque paire de premières nervures adjacentes entre elles, il est possible de réaliser un joint d'étanchéité ayant l'épaisseur et/ou le facteur de forme désiré(s). En outre, le maintien de chaque joint d'étanchéité lors d'une étape subséquente d'assemblage du réacteur électrochimique est assuré mécaniquement par les premières nervures.

Le joint d'étanchéité formé dans chaque gorge présentant une épaisseur strictement supérieure à une épaisseur des premières nervures est relativement simple à réaliser par sérigraphie. Plus particulièrement, l'écran de sérigraphie alors utilisé pour déposer la couche à base du matériau d'étanchéité peut venir reposer sur les nervures 71 et 72 lors de l'impression, de sorte qu'une surépaisseur soit nécessairement déposée, cette surépaisseur correspondant en outre à l'épaisseur intrinsèque de l'écran qui est bien contrôlée et modulable, rendant tout autant contrôlée et modulable la surépaisseur du joint d'étanchéité relativement à l'épaisseur des premières nervures.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente schématiquement une vue en perspective éclatée d'une partie d'un réacteur électrochimique selon un mode de réalisation de l'art antérieur.
La figure 2 représente schématiquement une vue en perspective regroupée d'un empilement de deux parties d'un réacteur électrochimique selon son mode de réalisation illustré sur la figure 1.
La figure 3 représente une vue en perspective d'une partie au moins d'une plaque bipolaire destinée à être située entre deux coeurs électrochimiques d'un réacteur électrochimique selon son mode de réalisation illustré sur la figure 1.
La figure 4 est une représentation schématique en coupe de côté d'une étape d'impression par sérigraphie pour la formation d'un motif d'impression.
La figure 5 représente schématiquement une vue de dessus d'une demi-plaque bipolaire, ou d'un demi-substrat constituant en partie une plaque bipolaire, en différenciant sa zone active, sa zone d'homogénéisation et sa zone périphérique.
Les figures 6A et 6B représentent des vues en coupe schématiques illustrant une première technologie d'étanchéification d'un réacteur électrochimique selon l'art antérieur.
Les figures 7A et 7B représentent des vues en coupe schématiques illustrant une deuxième technologie d'étanchéification d'un réacteur électrochimique selon l'art antérieur.
La figure 8A représente une vue partielle en coupe d'une partie de réacteur électrochimique avec une plaque fabriquée par emboutissage et illustre une solution d'étanchéification couramment utilisée dans ce cas.
La figure 8B représente une vue partielle en coupe d'une partie de réacteur électrochimique avec une plaque non emboutie et illustre une solution d'étanchéification hypothétique pour ce cas.
Les figures 9A à 9D représentent des vues de dessus d'une partie au moins d'un substrat selon un mode de réalisation du premier aspect de l'invention et illustrent des étapes d'un procédé de fabrication d'un joint d'étanchéité pour réacteur électrochimique selon un mode de réalisation du troisième aspect de l'invention.
La figure 10A représente une vue en coupe d'une partie d'un substrat selon un premier mode de réalisation du premier aspect de l'invention et d'une partie d'une couche de diffusion gazeuse.
La figure 10B représente une vue en coupe d'une partie d'un substrat selon un deuxième mode de réalisation du premier aspect de l'invention.
La figure 10C représente une vue en coupe d'une partie d'un substrat selon un troisième mode de réalisation du premier aspect de l'invention.
Les figures 11A et 11B représentent, en vue de dessus, d'agrandissements d'une partie d'un réacteur électrochimique comprenant un substrat selon une première variante du mode de réalisation du premier aspect de l'invention qui est illustré sur la figure 9B, la couche de diffusion gazeuse illustrée sur la figure 11B ne l'étant pas sur la figure 11A.
La Figure 11C représente, en vue de dessus, d'un agrandissement d'une partie d'un réacteur électrochimique comprenant un substrat selon une deuxième variante relativement à celle illustrée sur la figure 11B.
Les figures 11D et 11E représentent, en vue de dessus, des agrandissements d'une partie d'un réacteur électrochimique comprenant un substrat selon une autre variante relativement à celle illustrée sur les figures 11A et 11B, la couche de diffusion gazeuse illustrée sur la figure 11E ne l'étant pas sur la figure 11D.
La figure 12 illustre une vue partielle en coupe schématique d'une étape d'assemblage d'un substrat selon un mode de réalisation du premier aspect de l'invention avec une plaque d'un réacteur électrochimique.
La figure 13 illustre une vue partielle en coupe schématique d'une étape d'assemblage d'un substrat selon un autre mode de réalisation du premier aspect de l'invention avec une autre plaque d'un réacteur électrochimique, relativement à la figure 12.
La figure 14 illustre une vue partielle en coupe schématique d'une étape d'assemblage de deux substrats selon des modes de réalisation du premier aspect de l'invention différents entre eux avec deux plaques d'un réacteur électrochimique.
La figure 15 illustre schématiquement le résultat de l'étape d'assemblage illustrée sur la figure 14.
La figure 16 illustre un agrandissement d'une vue partielle en coupe schématique d'une étape d'assemblage d'un substrat selon le premier aspect de l'invention avec une plaque d'un réacteur électrochimique comprenant une nervure d'accroche.
La figure 17 illustre schématiquement un résultat, le cas échéant intermédiaire, de l'étape d'assemblage illustrée sur la figure 16.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les épaisseurs et les largeurs des différents éléments illustrés ne sont pas nécessairement représentatifs de la réalité ou de facteurs de forme réalistes.

### DESCRIPTION DÉTAILLÉE

Avant d'entamer une revue détaillée de modes de réalisation de l'invention, sont énoncées ci-après des caractéristiques optionnelles du premier aspect de l'invention qui peuvent éventuellement être utilisées en association ou alternativement.

Selon un exemple, les premières nervures s'étendent depuis la première face du substrat, et plus particulièrement, depuis une portion plane de la première face du substrat.

Selon un exemple, les premières nervures forment des protubérances s'étendant chacune depuis un plan dans lequel s'inscrit la première face du substrat.

Selon un exemple, chaque première nervure présente des côtés latéraux s'étendant chacun depuis un plan dans lequel s'inscrit la première face du substrat.

Selon un exemple, chaque première nervure est à base d'un matériau différent d'un matériau à base duquel le substrat est formé.

Selon un exemple, le substrat selon le premier aspect de l'invention comprend en outre une deuxième face, opposée à la première face du substrat, sur laquelle s'étend, ou est destiné à s'étendre, un deuxième guide d'écoulement pour réacteur électrochimique, ou le substrat comprend une deuxième face, opposée à la première face du substrat, destinée à être mise en regard d'un deuxième guide d'écoulement d'une plaque pour réacteur électrochimique, le substrat comprenant en outre, sur la deuxième face, au moins un deuxième joint d'étanchéité autour d'au moins une zone dite zone d'intérêt de la deuxième face qui est destinée à être étanchéifiée, et au moins deux deuxièmes nervures configurées de sorte à former au moins une gorge dans laquelle ledit au moins un deuxième joint d'étanchéité s'étend, ledit deuxième joint d'étanchéité présentant une épaisseur strictement supérieure à l'épaisseur d'une des deux deuxièmes nervures, de préférence strictement supérieure aux épaisseurs des deuxièmes nervures.

Sont énoncées ci-après des caractéristiques optionnelles du premier aspect de l'invention qui peuvent éventuellement concernés la deuxième face du substrat et/ou le deuxième guide d'écoulement et/ou le deuxième joint d'étanchéité et/ou les deuxièmes nervures tels qu'introduits ci-dessus.

Selon un premier mode de réalisation, la zone d'intérêt comprend au moins une zone sur laquelle s'étend ou est destiné à s'étendre, ou en vis-à-vis de laquelle est destiné à s'étendre, de préférence étroitement, le premier guide d'écoulement ; cette zone est parfois appelée ci-dessous zone d'intérêt principale.

Selon un exemple du premier mode de réalisation, la zone d'intérêt principale comprend au moins une zone destinée à former une zone active d'une plaque bipolaire du réacteur électrochimique.

Selon l'exemple précédent, la zone d'intérêt principale comprend en outre au moins une zone destinée à former au moins une partie d'une zone d'homogénéisation d'une plaque bipolaire du réacteur électrochimique.

De préférence, la zone d'intérêt principale comprend la zone destinée à former la zone active du réacteur électrochimique et la zone destinée à former la ou les zones d'homogénéisation d'une plaque bipolaire du réacteur électrochimique.

Selon un autre exemple du premier mode de réalisation, la zone d'intérêt principale comprend au moins une zone de la première face du substrat qui est complémentaire d'une zone destinée à former une zone périphérique d'une plaque bipolaire du réacteur électrochimique.

Selon un autre exemple du premier mode de réalisation, un pourtour extérieur de la zone d'intérêt principale délimite un pourtour intérieur d'une zone destinée à former une zone périphérique d'une plaque du réacteur électrochimique, le cas échéant la zone d'intérêt principale comprenant au moins une zone de la première face du substrat sur laquelle s'étend, ou est destiné à s'étendre, le premier guide d'écoulement.

Selon un deuxième mode de réalisation, alternatif ou complémentaire au premier mode de réalisation introduit ci-dessus, la zone d'intérêt comprend au moins une zone sur laquelle s'étend, ou en vis-à-vis de laquelle est destiné à s'étendre, un ajour, couramment appelé clarinette, traversant le substrat ; cette zone est parfois appelée ci-dessous zone d'intérêt secondaire, sans nécessairement préjugé de ce qu'elle nécessite pour exister l'existence d'une zone d'intérêt principale.

Selon un exemple du deuxième mode de réalisation, l'au moins un ajour est situé hors d'une zone destinée à former une zone active et/ou une zone d'homogénéisation d'une plaque bipolaire du réacteur électrochimique ou l'au moins un ajour est situé dans une zone destinée à former une zone périphérique d'une plaque bipolaire du réacteur électrochimique.

Selon un exemple, le premier guide d'écoulement comprenant des dents, par exemple imprimées, s'étendant, ou étant destinées à s'étendre, sur une partie de la première face du substrat, ou destinées à s'étendre en vis-à-vis d'une partie de la première face du substrat, les épaisseurs des premières nervures sont inférieures, et préférentiellement strictement inférieures, à une épaisseur des dents du premier guide d'écoulement ou à la somme d'une épaisseur des dents du premier guide d'écoulement et d'une épaisseur d'une couche de diffusion gazeuse destinée à venir en regard d'une partie de la première face du substrat de sorte à contacter des sommets des dents du premier guide d'écoulement, le cas échéant en étant comprimée.

Selon un mode de réalisation, le premier guide d'écoulement étant destiné à guider l'écoulement d'un réactif du réacteur électrochimique, les épaisseurs des premières nervures sont au plus sensiblement égales à la somme d'une épaisseur des dents du premier guide d'écoulement et d'une épaisseur d'une couche de diffusion gazeuse destinée à venir en regard d'une partie de la première face du substrat de sorte à contacter des sommets des dents du premier guide d'écoulement, le cas échéant en étant comprimée .

Selon un autre mode de réalisation, alternatif ou complémentaire du mode de réalisation précédent, le premier guide d'écoulement étant destiné à guider l'écoulement d'un fluide de refroidissement du réacteur électrochimique, les épaisseurs des premières nervures sont au plus sensiblement égales à une épaisseur des dents du premier guide d'écoulement.

Le cas échéant, et en particulier lorsque les deux précédents modes de réalisation sont combinés entre eux, un premier guide d'écoulement est destiné à guider l'écoulement d'un réactif du réacteur électrochimique et un deuxième premier guide d'écoulement est destiné à guider l'écoulement d'un fluide de refroidissement du réacteur électrochimique. Le premier guide d'écoulement et le deuxième guide d'écoulement peuvent s'étendre ou être destinés à s'étendre sur des faces opposées d'un même substrat, ou être destinés à s'étendre en vis-à-vis des faces opposées d'un même substrat.

Selon un exemple, une dimension transversale des premières nervures est comprise entre 0,5 mm et 3 mm, de préférence entre 0,5 mm et 1,5 mm.

Selon un exemple, une dimension transversale de chaque gorge entre deux premières nervures est comprise entre 0,5 mm et 3 mm, de préférence entre 0,5 mm et 1,5 mm.

Selon un exemple, au moins une des premières nervures est à base de l'un au moins parmi : une résine thermodurcissable, telle que le polychlorure de vinyle (PVC) ou un polyamide (PA) ou un polyépoxyde (encore appelé polymère époxyde ou communément « époxy »), chargé ou non, et un thermoplastique, tel que le polyuréthane (PU) ou le polypropylène (PP) ou le poly(fluorure de vinylidène) (PVDF), chargé ou non.

Selon un exemple, le joint d'étanchéité est à base de l'un au moins parmi : une résine époxy, le silicone, un polyuréthane, le caoutchouc nitrile, un fluorocarbone et l'éthylène-propylène-diène monomère.

Selon un exemple, le substrat comprend en outre une nervure dite d'accroche s'étendant depuis une deuxième face du substrat, opposée à la première face du substrat, et destinée à être mise en regard d'un joint d'étanchéité d'un autre substrat, par exemple selon le premier aspect de l'invention, l'épaisseur de la nervure d'accroche étant alors inférieure aux épaisseurs des premières nervures de l'autre substrat. De préférence, l'épaisseur de la nervure d'accroche est supérieure à 10 µm. La largeur de la nervure d'accroche est strictement inférieur à la largeur de la gorge, et de préférence supérieur à 30 µm. Un des avantages que procurent la nervure d'accroche est de pallier une éventuelle irrégularité de l'épaisseur du joint d'étanchéité déposé.

Selon un mode de réalisation, le joint d'étanchéité présente une épaisseur inférieure ou égale à 130 %, de préférence à 120%, de l'épaisseur de celle des deux premières nervures qui présente l'épaisseur la plus élevée, ou inférieure ou égale à 130 %, de préférence à 120% des épaisseurs des premières nervures. Cela permet de s'assurer que le joint s'écrase bien jusqu'à ce qu'il y ait contact entre les plaques d'un assemblage.

Selon un mode de réalisation, le premier guide d'écoulement étant destiné à guider l'écoulement d'un réactif du réacteur électrochimique, la nervure qui, parmi les deux premières nervures, délimite un pourtour intérieur d'une zone d'intérêt sur laquelle s'étend, ou est destiné à s'étendre, le premier guide d'écoulement, ou en vis-à-vis de laquelle est destiné à s'étendre le premier guide d'écoulement, comprend des premiers retraits de matière ouverts vers ladite zone d'intérêt et/ou des premiers ergots s'étendant vers ladite zone d'intérêt, chaque premier retrait de matière et chaque premier ergot étant d'une forme et de dimensions les prédestinant à coopérer étroitement avec un deuxième ergot et un deuxième retrait de matière, respectivement, chaque deuxième ergot s'étendant depuis un pourtour extérieur d'une couche de diffusion gazeuse ou chaque deuxième retrait de matière étant ouvert vers l'extérieur d'une couche de diffusion gazeuse, la couche de diffusion gazeuse étant destinée à venir en regard d'au moins une partie de la première face du substrat, de sorte à contacter ledit au moins un premier guide d'écoulement, par exemple en étant comprimée. Cela permet d'aider au positionnement et au maintien mécanique de la couche de diffusion gazeuse relativement au substrat selon le premier aspect de l'invention.

Selon un exemple, au moins un premier retrait de matière s'étend sur toute une dimension transversale de ladite nervure.

Sont énoncées ci-après des caractéristiques optionnelles du deuxième aspect de l'invention qui peuvent éventuellement être utilisées en association ou alternativement.

Le deuxième aspect de l'invention peut concerner une plaque bipolaire ou un réacteur électrochimique comprenant au moins un substrat selon l'un quelconque des exemples et modes de réalisation précédemment mentionnés.

Selon un exemple, le réacteur électrochimique selon le deuxième aspect de l'invention peut comprendre en outre une couche de diffusion gazeuse située en regard d'au moins une partie de la première face du substrat de sorte à contacter ledit au moins un premier guide d'écoulement, par exemple en étant comprimée ; le premier guide d'écoulement est destiné à guider l'écoulement d'un réactif du réacteur électrochimique ; et la nervure qui, parmi les deux premières nervures, délimite un pourtour intérieur d'une zone d'intérêt sur laquelle s'étend, ou est destiné à s'étendre, le premier guide d'écoulement, ou en vis-à-vis de laquelle est destiné à s'étendre le premier guide d'écoulement, comprend des premiers retraits de matière ouverts vers ladite zone d'intérêt et/ou des premiers ergots s'étendant vers ladite zone d'intérêt, chaque premier retrait de matière et chaque premier ergot étant d'une forme et de dimensions les prédestinant à coopérer étroitement avec un deuxième ergot et un deuxième retrait de matière de la couche de diffusion gazeuse, respectivement, chaque deuxième ergot s'étendant depuis un pourtour extérieur de la couche de diffusion gazeuse et chaque deuxième retrait de matière étant ouvert vers l'extérieur de la couche de diffusion gazeuse.

Selon un exemple, au moins un premier retrait de matière s'étend sur toute une dimension transversale de ladite nervure, de sorte que la couche de diffusion gazeuse contacte le joint d'étanchéité au niveau dudit au moins un premier retrait de matière, la couche de diffusion gazeuse se trouvant ainsi solidarisée, par exemple collée, au substrat.

Le troisième aspect de l'invention concerne un procédé de fabrication d'un joint d'étanchéité pour réacteur électrochimique tel qu'introduit plus haut.

Sont énoncées ci-après des caractéristiques optionnelles du troisième aspect de l'invention qui peuvent éventuellement être utilisées en association ou alternativement.

Selon un exemple, le dépôt des premières nervures est réalisé de sorte à ce qu'une dimension transversale des premières nervures soit comprise entre 0,5 mm et 3 mm, de préférence entre 0,5 mm et 1,5 mm.

Selon un exemple, le dépôt des premières nervures est réalisé de sorte à ce qu'une dimension transversale de chaque gorge entre deux premières nervures soit compris entre 0,5 mm et 3 mm, de préférence entre 0,5 mm et 1,5 mm.

Selon un exemple, le dépôt de la couche à base d'un matériau d'étanchéité est réalisé de sorte que l'épaisseur du joint d'étanchéité est inférieure ou égale à 130 %, de préférence à 120%, de l'épaisseur de celle des deux premières nervures qui présente l'épaisseur la plus élevée, ou inférieure ou égale à 130 %, de préférence à 120%, des épaisseurs des premières nervures.

Selon un mode de réalisation, le dépôt des premières nervures comprend au moins une étape d'impression par sérigraphie desdites premières nervures.

Selon un mode de réalisation, le dépôt de la couche à base d'un matériau d'étanchéité comprend la mise en oeuvre d'au moins une technique parmi la dispense (ou « dispensing » selon la terminologie anglo-saxonne), la sérigraphie et la pulvérisation (ou « spraying » selon la terminologie anglo-saxonne).

Selon un mode de réalisation, le procédé comprend en outre, suite à l'étape de dépôt des premières nervures, au moins l'une parmi une étape de réticulation des premières nervures et une étape de séchage des premières nervures.

Selon un exemple, le matériau d'étanchéité est à base de l'un au moins parmi : une résine époxy, le silicone, un polyuréthane, le caoutchouc nitrile, un fluorocarbone et l'éthylène-propylène-diène monomère (EPDM).

Selon un exemple, le dépôt de la couche à base d'un matériau d'étanchéité est réalisé par sérigraphie au pochoir.

Selon un mode de réalisation, le procédé comprend en outre, suite à l'étape de dépôt de la couche à base du matériau d'étanchéité, au moins l'une parmi une étape de réticulation de cette même couche et une étape de séchage de cette même couche.

Selon un mode de réalisation, dans lequel le premier guide d'écoulement est destiné à guider l'écoulement d'un réactif du réacteur électrochimique, le dépôt de la nervure qui, parmi les deux premières nervures, délimite un pourtour intérieur d'une zone d'une zone d'intérêt sur laquelle s'étend, ou est destiné à s'étendre, le premier guide d'écoulement, ou en vis-à-vis de laquelle est destiné à s'étendre le premier guide d'écoulement, comprend des premiers retraits de matière ouverts vers ladite zone d'intérêt et/ou des premiers ergots s'étendant vers ladite zone d'intérêt, chaque premier retrait de matière et chaque premier ergot étant d'une forme et de dimensions les prédestinant à coopérer étroitement avec un deuxième ergot et un deuxième retrait de matière d'une couche de diffusion gazeuse destinée à venir en regard d'au moins une partie de la première face du substrat de sorte à contacter ledit au moins un premier guide d'écoulement, respectivement, chaque deuxième ergot s'étendant depuis un pourtour extérieur de la couche de diffusion gazeuse et chaque deuxième retrait de matière étant ouvert vers l'extérieur de la couche de diffusion gazeuse.

Comme mentionné plus haut, le quatrième aspect de l'invention concerne un procédé de fabrication d'une plaque bipolaire pour réacteur électrochimique ou d'un réacteur électrochimique comprenant la mise en oeuvre du procédé de fabrication d'un joint d'étanchéité selon le troisième aspect de l'invention.

Le procédé de fabrication du joint d'étanchéité mis en oeuvre peut être un procédé selon l'un quelconque des exemples et modes de réalisation précédemment mentionnés.

Selon un mode de réalisation du quatrième aspect de l'invention, dans lequel le premier guide d'écoulement est destiné à guider l'écoulement d'un réactif du réacteur électrochimique, le procédé comprend en outre, après la formation du joint d'étanchéité, les étapes suivantes :
- Fournir une couche de diffusion gazeuse, un assemblage membrane-électrodes et un renfort associé audit assemblage membrane-électrodes,
- Reporter la couche de diffusion gazeuse sur une zone du premier guide d'écoulement destinée à former une zone active du réacteur électrochimique,
- Reporter l'assemblage membrane-électrodes sur la couche de diffusion gazeuse,
- Reporter le renfort de l'assemblage membrane-électrodes sur une zone de la première face du substrat destinée à former au moins une zone d'homogénéisation du réacteur électrochimique, voire également une zone périphérique du réacteur électrochimique, de sorte à couvrir un pourtour extérieur de l'assemblage membrane-électrodes et à venir en vis-à-vis du joint d'étanchéité, et
- Coller le renfort de l'assemblage membrane-électrodes et le joint d'étanchéité entre eux par pressage à chaud,
de sorte que la couche de diffusion gazeuse et l'assemblage membrane-électrodes se trouvent comprimés dans un espace étanchéifié par le joint d'étanchéité.

Selon un mode de réalisation du quatrième aspect de l'invention, le procédé comprend en outre la formation, de préférence par impression, sur la face de la plaque pour réacteur électrochimique destinée à être mise en regard de la première face du substrat sur laquelle sont déposées, ou sont destinées à être déposées, les premières nervures, d'une nervure dite d'accroche présentant une largeur inférieure à l'espace entre lesdites deux premières nervures et destinée à venir en vis-à-vis du joint d'étanchéité formé sur la première face du substrat entre lesdites deux premières nervures, de sorte que, lors de l'assemblage de la plaque bipolaire ou du réacteur électrochimique, la nervure d'accroche coopère avec le joint d'étanchéité, l'épaisseur de la nervure d'accroche étant inférieure aux épaisseurs des premières nervures, et de préférence supérieure à 10 µm.

L'invention selon ce mode de réalisation de l'invention repose ainsi sur l'utilisation d'une nervure supplémentaire dite d'accroche destinée à coopérer avec le joint d'étanchéité, pour assurer une étanchéité encore améliorée, et/ou limiter, voire annihiler, tout risque de glissement du substrat relativement à la plaque, en particulier lors de leur assemblage, et/ou pallier une éventuelle irrégularité de l'épaisseur du joint d'étanchéité.

Selon un mode de réalisation du troisième ou du quatrième aspect de l'invention, le dépôt desdites au moins deux premières nervures comprend au moins une étape d'impression par sérigraphie desdites premières nervures, une partie d'un procédé de fabrication du premier guide d'écoulement étant concomitante à ladite au moins une étape d'impression par sérigraphie desdites premières nervures et étant mise en oeuvre par sérigraphie à l'aide d'un même écran maillé.

On entend par un paramètre « sensiblement égal/supérieur/inférieur à » une valeur donnée que ce paramètre est égal/supérieur/inférieur à la valeur donnée, à plus ou moins 20 %, voire 10 %, près de cette valeur. On entend par un paramètre « sensiblement compris entre » deux valeurs données que ce paramètre est au minimum égal à la plus petite valeur donnée, à plus ou moins 20 %, voire 10 %, près de cette valeur, et au maximum égal à la plus grande valeur donnée, à plus ou moins 20 %, voire 10 %, près de cette valeur.

Lorsqu'un paramètre est défini comme supérieur/inférieur à une valeur donnée ou à un autre paramètre, il peut être égal à ladite valeur donnée ou audit autre paramètre ; l'égalité est exclue par l'usage des termes « strictement supérieur/inférieur ».

On entend, par « ajour », une ouverture de forme quelconque faite dans une pièce, et en particulier dans l'épaisseur d'une pièce essentiellement plate.

Une couche peut être composée de plusieurs sous-couches d'un même matériau ou de matériaux différents. De la même façon, une étape d'impression, notamment par sérigraphie, peut comprendre plusieurs étapes de dépôt de matière. Ainsi, une couche peut en fait être composée de plusieurs couches ou sous-couches superposées entre elles.

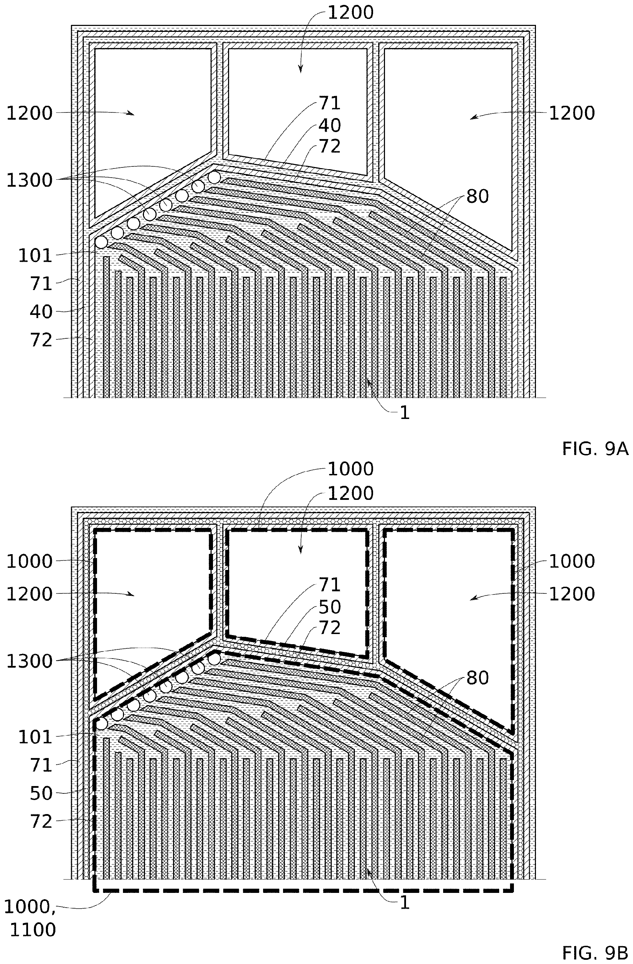

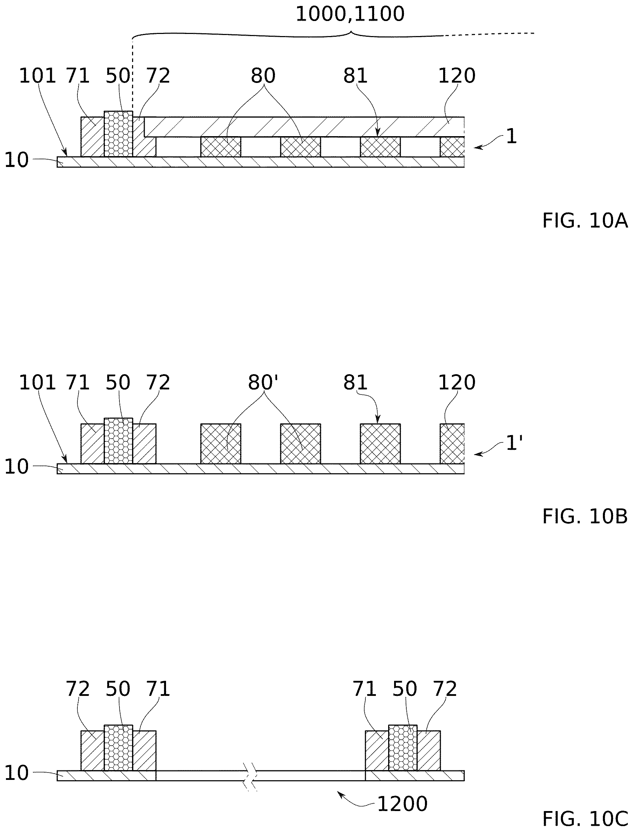

Un substrat 10 selon le premier aspect de l'invention va maintenant être décrit en référence aux figures 9B, 10A, 10B et 10C. Plus particulièrement, les figures 10A, 10B et 10C illustrent trois modes de réalisation du substrat selon le premier aspect de l'invention qui sont différents entre eux, tandis que la figure 9B peut être considérée comme illustrant chacun de ces trois modes de réalisation. Ainsi, on comprend qu'au moins deux de ces trois modes de réalisation peuvent être compris dans une même plaque bipolaire 100 pour réacteur électrochimique ou dans un même réacteur électrochimique.

Une première face 101 du substrat 10 peut :
- comprendre un premier guide d'écoulement 1 pour réacteur électrochimique, comme illustré sur la figure 9B,
- être destiné à comprendre un premier guide d'écoulement 1, ou
- être destiné à être mis en regard, par sa première face 101, d'une plaque 20 comprenant un guide d'écoulement 1 pour réacteur électrochimique.

La deuxième alternative mentionnée ci-dessus vise à indiquer que, dans l'acceptation la plus large d'un mode de réalisation du premier aspect de l'invention, ni le substrat 10, ni la plaque 20 ne comprennent effectivement le guide d'écoulement 1, ce dernier étant toutefois destiné à être supporté ultérieurement par le substrat 10.

Selon la troisième alternative mentionnée ci-dessus, la plaque 20 peut notamment être :
- une couche de diffusion gazeuse 120, assemblée le cas échéant avec un assemblage membrane-électrodes ou AME 140 et son renfort 141, ou
- une couche électriquement conductrice 130.

Que ce soit le substrat 10 qui supporte ou est destiné à supporter le guide d'écoulement 1, ou la plaque 20 qui supporte le guide d'écoulement 1, le substrat 10 selon le premier aspect de l'invention comprend, sur sa première face 101, un joint d'étanchéité 50 autour d'au moins une zone, dite zone d'intérêt 1000, destinée à être étanchéifiée.

Le premier guide d'écoulement 1 comprend quant à lui des dents 80 ou 80', par exemple imprimées, avantageusement par sérigraphie.

Notons ici la distinction suivante qui peut être faite entre les dents référencées 80 et celles référencées 80'. Les dents 80 peuvent être relatives aux dents constitutives d'un guide d'écoulement 1 dédié à l'écoulement d'un réactif du réacteur électrochimique, tandis que les dents 80' peuvent être relatives aux dents constitutives d'un guide d'écoulement 1 dédié à l'écoulement d'un liquide de refroidissement.

Notons également que la figure 10A illustre des dents référencées 80 car constitutives d'un guide d'écoulement 1 dédié à l'écoulement d'un réactif du réacteur électrochimique, tandis que la figure 10B illustre des dents référencées 80' car constitutives d'un guide d'écoulement 1 dédié à l'écoulement d'un liquide de refroidissement.

Notons encore qu'on distingue principalement trois modes de circulation des réactifs ou du liquide de refroidissement dans les canaux d'un guide d'écoulement 1 :
- les canaux en serpentin : un ou plusieurs canaux parcourent l'ensemble de la zone active en plusieurs allers-retours ;
- les canaux parallèles : un faisceau de canaux parallèles et traversants parcourt la zone active de part en part ; et
- les canaux interdigités : un faisceau de canaux parallèles et bouchés parcourt la zone active de part en part. Chaque canal est bouché soit du côté de l'entrée, soit du côté de la sortie de fluide. Le fluide entrant dans un canal est alors contraint à traverser localement la couche de diffusion gazeuse pour rejoindre un canal adjacent et ensuite atteindre la sortie de fluide de ce canal adjacent.

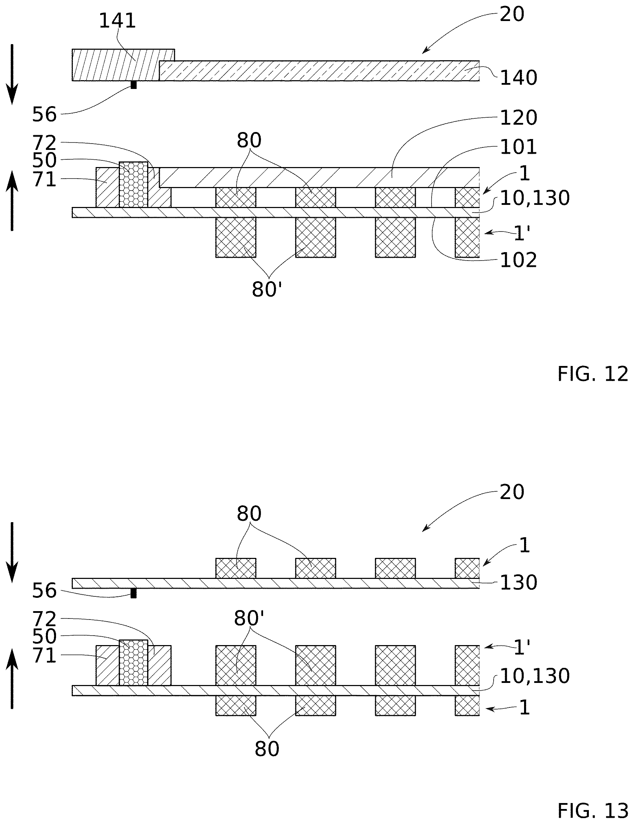

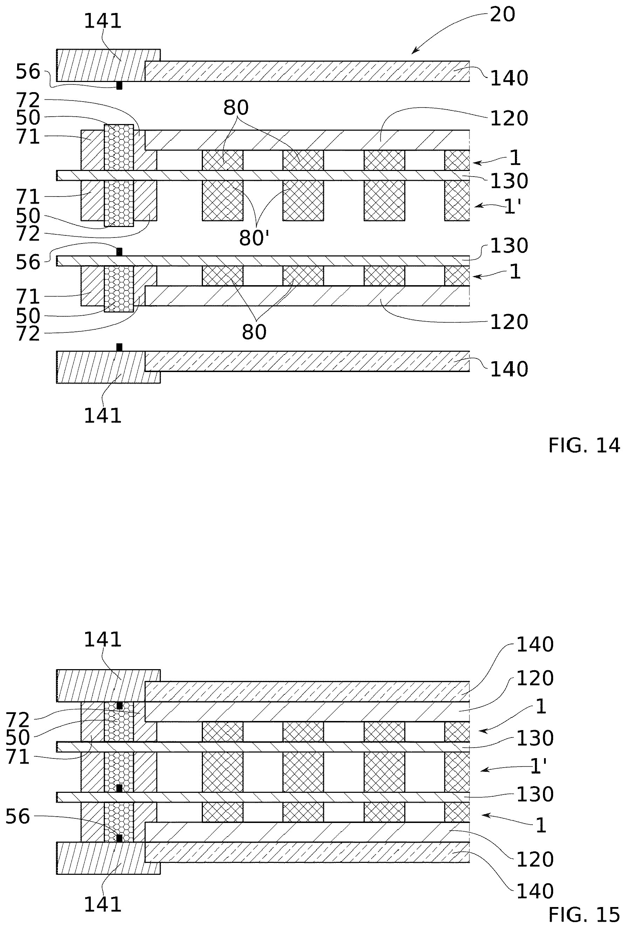

Les différents aspects de l'invention sont adaptés à un guide d'écoulement, ou à sa fabrication, voire à plusieurs guides d'écoulement 1 et 1' (Cf. par exemple figures 12 et 15), ou à leur fabrication, au moins selon n'importe lequel des trois modes de circulation énoncés ci-dessus.

La zone d'intérêt 1000 autour de laquelle s'étend, de préférence en une boucle continue est fermée, le joint d'étanchéité 50 peut être choisie en fonction des besoins d'étanchéification de différentes zones du substrat 10. Chaque zone du substrat 10 peut en effet être définie relativement à la fonction qu'aura cette zone dans le réacteur électrochimique. Ces zones peuvent notamment être telles que décrites ci-dessus en références à la figure 5.

Avantageusement, la zone d'intérêt 1000 comprend une zone de la première face 101 du substrat 10 sur laquelle s'étend le premier guide d'écoulement 1 ou sur laquelle est destiné à s'étendre le premier guide d'écoulement 1 ou au niveau de laquelle le premier guide d'écoulement 1 supporté par la plaque 20 est destiné à être mis en regard du substrat 10. Une telle zone d'intérêt 1000 peut être appelée par la suite zone d'intérêt principale 1100 ; elle est par exemple telle qu'illustrée sur la figure 9B où elle est délimitée, pour ce qui est de sa partie illustrée, par un trait gras en tirets, ou sur la figure 10A. La même illustration de la zone d'intérêt principal glissant celle de la figure 10A aurait pu être reportée sur la figure 10B.

En alternative ou en complément à ladite zone d'intérêt principal 1100, la zone d'intérêt 1000 peut comprendre une zone d'intérêt dite subsidiaire 1200 prenant la forme d'un ajour, portant la même référence numérique, et communément appelé « clarinette », traversant le substrat 10, et traversant plus particulièrement le substrat 10 dans son épaisseur. Ces ajours ou clarinettes 1200 sont au nombre de trois sur les illustrations fournies, et sont entourés d'un trait gras en tirets sur la figure 9B. Les clarinettes 1200 servent, de façon connue, de passages des fluides, ces derniers étant ensuite distribués sur les cellules 500. Ces ajours 1200 sont donc aussi des zones d'intérêt 1000 potentiellement avantageusement étanchéifiées au niveau de leur pourtour, grâce à un mode de réalisation du substrat 10 selon le premier aspect de l'invention qui est par exemple tel qu'illustré sur la figure 10C.

Le substrat 10 comprend en outre au moins deux premières nervures 71,72 configurées de sorte à former au moins une gorge 40 (Cf. figure 9A) dans laquelle le joint d'étanchéité 50 s'étend. La dimension transversale de la gorge 40 située entre les deux premières nervures 71 et 72 est donc sensiblement égale à la dimension transversale du joint d'étanchéité 50. Notons que, le joint d'étanchéité 50 présentant une partie surélevée dépassant des premières nervures 71 et 72, il est possible que la dimension transversale de cette partie surélevée soit supérieure à la dimension transversale de la gorge 40.

De manière générale, il est préférable que le(s) matériau(x) choisi(s) pour constituer les premières nervures 71 et 72 résiste(nt) aux conditions régnant usuellement dans les réacteurs électrochimiques, et notamment dans les piles à combustible, soit typiquement à des températures allant de 80°C à 200°C et à une hygrométrie très élevée, et ce de préférence sans polluer les réactifs (et autre liquide de refroidissement) ou le milieu environnant. Il est à noter ici que les humidités relatives (ou « Relative Humidity » (notée *RH*) selon la terminologie anglo-saxonne) dans une pile à combustible varient fortement en fonction des conditions d'opération que l'on impose à la pile ; la fourchette d'humidité relative que peut expérimenter une pile à combustible est ainsi comprise entre 0 et 100%RH.

Notamment afin de résister aux conditions régnant usuellement dans les réacteurs électrochimiques, les premières nervures 71 et 72 sont avantageusement à base de l'un parmi :
- une résine thermodurcissable, telle que le PVC (acronyme anglais de « PolyVinylChloride », en français « Polychlorure de vinyle ») ou un polyamide (PA) ou un polyépoxyde, chargé ou non, et
- un thermoplastique, tel que le polyuréthane (PU) ou le polypropylène (PP) ou le poly(fluorure de vinylidène) (PVDF), chargé ou non.

L'épaisseur du joint d'étanchéité 50 est de préférence strictement supérieure aux épaisseurs des premières nervures 71 et 72.

Il est à noter que les épaisseurs des premières nervures ne sont pas nécessairement égales entre elles. Ainsi, le joint d'étanchéité 50 dépasse de préférence de la gorge 40 formée par les premières nervures 71 et 72, en dépassant de chacune des deux premières nervures 71 et 72, y compris celle présentant l'épaisseur la plus élevée.

Par ailleurs, les épaisseurs des premières nervures 71 et 72, ou l'épaisseur de celle qui, parmi les premières nervures 71 et 72, présente l'épaisseur la plus élevée, est de préférence supérieure à l'épaisseur des dents 80 ou 80' du guide d'écoulement 1.

En référence à la figure 10A, lorsque les dents 80 sont destinées à délimiter l'écoulement d'un réactif du réacteur électrochimique, les épaisseurs des premières nervures 71 et 72 sont de préférence inférieures à la somme de l'épaisseur desdites dents 80 et de l'épaisseur d'une couche de diffusion gazeuse 120. Cette dernière peut alors, de façon connue, être destinée à être assemblée avec un AME 140 et son renfort 141, et à être éventuellement comprimée dans le réacteur électrochimique, par exemple de façon illustrée sur la figure 12. On comprend que cette compression potentielle de la couche de diffusion gazeuse 120 peut conduire à une diminution, même locale, de son épaisseur ; la borne supérieure des épaisseurs des premières nervures 71 et 72 peut donc le cas échéant être définie en prenant en compte ce phénomène de compression.

En référence à la figure 10B, lorsque les dents 80' sont destinées à délimiter l'écoulement d'un liquide de refroidissement du réacteur électrochimique, les épaisseurs des premières nervures 71 et 72 sont de préférence égales à l'épaisseur desdites dents 80'. Un tel substrat 10 selon le premier aspect de l'invention peut alors, de façon connue, être assemblé à une plaque électriquement conductrice 130 par exemple de la façon illustrée sur la figure 13.

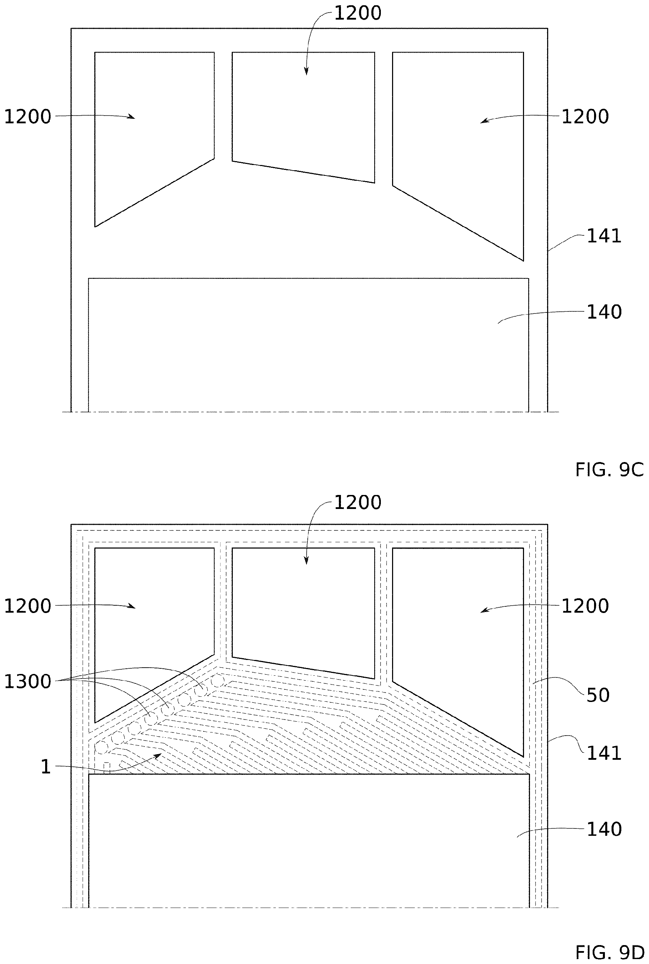

Ainsi, lors d'une étape d'assemblage du substrat 10 selon le premier aspect de l'invention avec une plaque 20 du réacteur électrochimique (comprenant un AME 140 et son renfort 141 (Cf. figures 9C, 9D et 12) ou une plaque électriquement conductrice 130(Cf. figure 13)), le joint d'étanchéité 50 se trouve pincer contre ladite autre plaque 20, permettant ainsi d'assurer l'étanchéité de la zone d'intérêt 1000, et le joint d'étanchéité 50 se trouve en outre écrasé jusqu'à ce qu'il y ait contact, notamment électrique, entre les sommets 81 des dents 80, 80' supportées par le substrat 10 et ladite autre plaque 20.

Si l'épaisseur du joint d'étanchéité 50 est trop importante, il est possible qu'il ne puisse pas être suffisamment écrasé pour qu'il y ait effectivement contact entre les sommets 81 des dents 80, 80' du guide d'écoulement 1 et la plaque 20.

Pour parer à cette éventualité, on peut prévoir que l'épaisseur du joint d'étanchéité 50 ne dépasse pas 130%, de préférence 120%, de l'épaisseur de la première nervure qui, parmi les deux premières nervures 71 et 72, présente l'épaisseur la plus élevée.

Ainsi, l'épaisseur du joint d'étanchéité 50 peut être comprise entre 100% et 130%, de préférence entre 100% et 120%, et encore plus préférentiellement entre 105% et 115%, de la somme de l'épaisseur des dents 80 du premier guide d'écoulement 1 et de l'épaisseur de la GDL 120 ou de l'épaisseur des dents 80' du premier guide d'écoulement 1.

En référence aux figures 9C, 9D et 12, dans le cas d'un d'assemblage du substrat 10 avec un AME 140 et un renfort 141 d'AME 140, l'AME 140 est de préférence positionnée au moins sur la couche de diffusion gazeuse 120, qui s'étend sur la zone active 2000 du réacteur électrochimique ; ainsi, sur les figures 9C et 9D, l'AME 140 cache la couche de diffusion gazeuse 120. En outre, tandis que le renfort 141 est représenté de façon opaque sur la figure 9C, il est représenté en transparence sur la figure 9D, de sorte à laisser apparaître les parties sous-jacentes du substrat 10, et en particulier du guide d'écoulement 1 et du joint d'étanchéité 50, qui ne sont pas couvertes par l'AME 140. On notera que dans l'exemple illustré aucune partie du joint d'étanchéité 50 n'est couverte par l'AME 140. On s'aperçoit que le renfort d'AME 141 complète l'étendue de l'AME 140, potentiellement avec un recouvrement partiel de l'un par l'autre (Cf. figure 12 par exemple), de sorte à être positionné sur au moins une partie du guide d'écoulement 1 s'étendant sur les zones d'homogénéisation 3000 du réacteur électrochimique. Comme mieux représenté sur la figure 12, c'est de préférence le renfort de l'AME 141 qui est destiné à venir écraser, lors de l'assemblage du réacteur électrochimique, le joint d'étanchéité 50.

En alternative à la condition selon laquelle les épaisseurs des premières nervures 71 et 72 sont inférieures à la somme de l'épaisseur desdites dents 80 et de l'épaisseur de la couche de diffusion gazeuse 120, on peut prévoir que le pourtour extérieur de la couche de diffusion gazeuse 120 soit situé en vis-à-vis de celle des deux premières nervures 71 et 72 qui délimite le pourtour intérieur de la zone d'intérêt principale 1100, voire en vis-à-vis d'une partie au moins du joint d'étanchéité 50. La couche de diffusion gazeuse 120 peut alors venir en butée contre le pourtour intérieur de celle des deux premières nervures 71 et 72 qui délimitent le pourtour extérieur de ladite zone d'intérêt principale 1100.

On comprend que, dans cette alternative, la nervure qui délimite le pourtour extérieur de la zone d'intérêt principale 1100 peut également constituer une première nervure délimitant le pourtour intérieur d'une seconde zone d'intérêt principale comprenant la première, pour peu que trois premières nervures soient déposées qui forment deux gorges 40 de part et d'autre d'une première nervure centrale parmi lesdites trois premières nervures.

En référence aux figures 10B et 13, le guide d'écoulement 1 étant destiné à guider l'écoulement d'un fluide de refroidissement du réacteur électrochimique, le guide d'écoulement 1, alors appelé guide de refroidissement, comprend des dents 80' qui peuvent présentées des dimensions et formes différentes de celles des dents 80 constitutives d'un guide d'écoulement pour réactif, et peuvent être disposées, sur la face 101 du substrat 10, selon une autre distribution. Si les dents 80' sont illustrées sur les figures 12 à 15 comme présentant une épaisseur sensiblement égale à la somme de l'épaisseur des dents 80 et de la couche de diffusion gazeuse 120 telles qu'illustrées sur les mêmes figures, c'est de façon fortuite, et en tout cas non limitative. Il peut d'ailleurs être préféré que les dents 80 dédiées à l'écoulement du réactif et les dents 80' du guide de refroidissement soient déposées par sérigraphie, de sorte que leurs épaisseurs soient en fait limitées par une même contrainte liée à l'utilisation de cette technique d'impression.

Il est à noter ici que, comme illustré par exemple sur les figures 9A et 9B, une première nervure 72 délimitant le pourtour intérieur d'une zone d'intérêt principale 1100 peut également délimiter le pourtour extérieur d'une zone d'intérêt subsidiaire 1200. Ainsi, en référence à la figure 9B, un même joint d'étanchéité 50 s'étendant continûment entre les premières nervures 71 et 72 peut permettre d'étanchéifier à la fois la zone d'intérêt principale 1100 et chacune des zones d'intérêt subsidiaire 1200. C'est ainsi que, sur la figure 10C, la première nervure portant la référence 71 se situe du côté intérieur de la zone d'intérêt 1200 subsidiaire, tandis que la première nervure portant la même référence se situe du côté extérieur de la zone d'intérêt principale 1100 telle qu'illustrée par exemple sur la figure 10A.

Il est à noter, par ailleurs, que les petits ronds 1300 illustrés sur les figures 9A, 9B et 9D notamment, sont également des ajours traversant le substrat 10, et traversant plus particulièrement le substrat 10 dans son épaisseur. Cependant, ils ne constituent pas une zone d'intérêt 1000. Ils permettent, de façon connue, soit l'arrivée, soit l'évacuation du fluide qui s'écoule sur la zone d'intérêt principale 1100. Le fluide est alors typiquement issu d'une zone située de l'autre côté du substrat 10, qui elle est ouverte sur les clarinettes 1200.

Comme décrit en introduction, plusieurs types de joints 50 peuvent être envisagés et deux technologies se distinguent particulièrement : la technologie CIPG et la technologie FIPG.

Le choix de la technologie utilisée peut notamment emporter le choix des matériaux constituant le joint d'étanchéité 50. Ainsi, on prévoit que puissent avantageusement constituer le joint d'étanchéité 50, en fonction de la technologie retenue pour un éventuel assemblage subséquent, les matériaux suivants :
- au moins l'un parmi une résine époxy et un polyuréthane, si la technologie retenue est la technologie FIPG, et
- au moins l'un parmi le silicone, le caoutchouc nitrile (NBR), le fluorocarbone (FKM) et l'éthylène-propylène-diène monomère (EPDM), si la technologie CIPG est retenue.

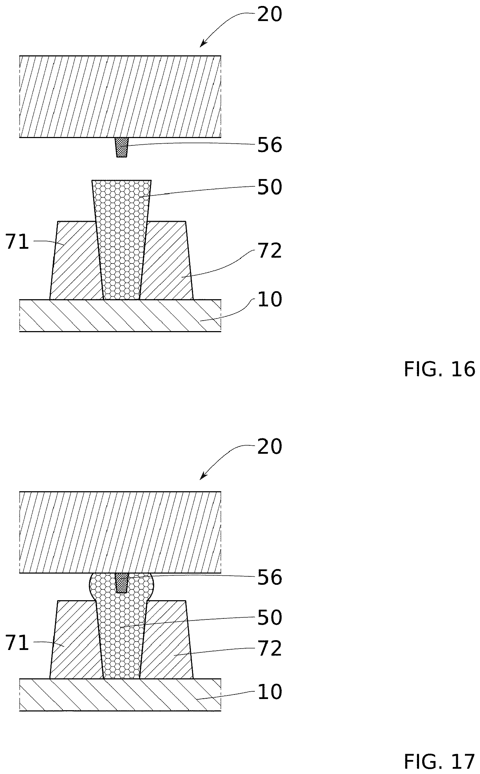

En outre, en référence aux figures 16 et 17, le substrat 10 selon un mode de réalisation du premier aspect de l'invention ou la plaque 20 destinée à venir en vis-à-vis de la première face 101 de substrat 10 peut comprendre une nervure dite d'accroche 56. Cette dernière peut s'étendre depuis une deuxième face 102 du substrat 10 qui est opposée à la première face 101. En alternative ou en complément, elle peut être destinée à être mise en regard d'un joint d'étanchéité 50 d'un autre substrat. L'épaisseur de la nervure d'accroche 56 est inférieure aux épaisseurs des premières nervures 71 et 72 de sorte à ne pas s'opposer aux rapprochement de l'un par l'autre, notamment jusqu'à ce qu'un contact, notamment électrique, soit le cas échéant assuré via le sommet des dents 80, 80' du guide d'écoulement 1. De préférence, l'épaisseur de la nervure d'accroche 56 est tout de même supérieure à 10 µm.

L'invention selon ce mode de réalisation de l'invention repose ainsi sur l'utilisation d'une nervure supplémentaire dite d'accroche destinée à venir en regard d'un joint d'étanchéité 50 de l'un quelconque des modes de réalisation du premier aspect de l'invention, pour coopérer avec ce joint d'étanchéité, le cas échéant par pénétration en son sein, de préférence par déformation dudit joint, afin d'assurer une étanchéité encore améliorée, et/ou de limiter, voire d'annihiler, tout risque de glissement du substrat 10 relativement à un autre substrat 10 ou à une plaque 20, lors de leur assemblage.

Par ailleurs, en vue d'un assemblage du substrat 10 selon le premier aspect de l'invention avec une couche de diffusion gazeuse 120, on prévoit avantageusement que la première nervure 72 qui, parmi les premières nervures 71 et 72, délimite un pourtour intérieur d'une zone d'intérêt principale 1100, présente une géométrie facilitant cet assemblage.

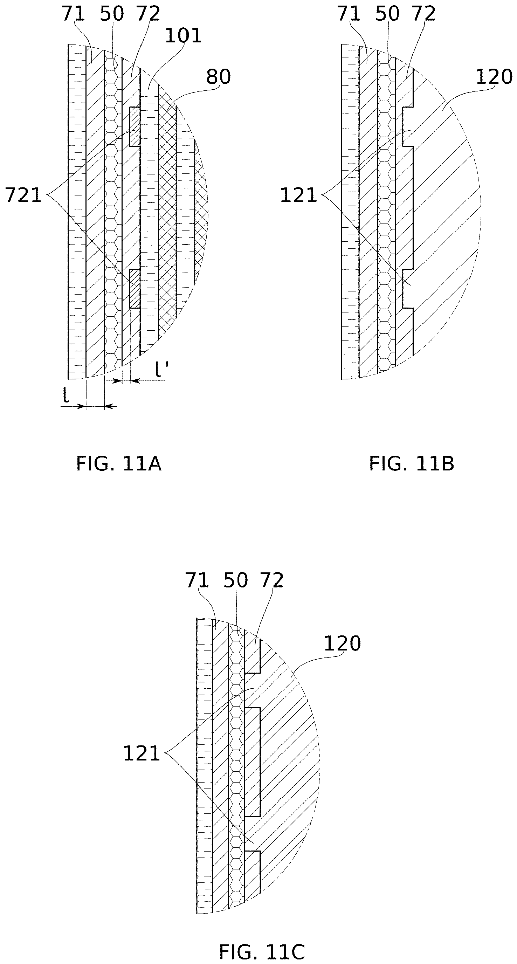

Ainsi, selon un exemple, illustré aux figures 10A, 11A et 11B, cette première nervure 72 peut comprendre des premiers retraits de matière 721 ouverts vers la zone d'intérêt principale 1100 dont la forme et les dimensions les prédestinent à coopérer avec autant d'ergots 121, appelés ci-dessous deuxièmes ergots, s'étendant depuis le pourtour extérieur de la couche de diffusion gazeuse 120.

Que l'indentation soit positive ou négative, elle peut par exemple représenter de l'ordre de 50% de la largeur de la première nervure 72, comme illustré sur les dessins.

Avantageusement, comme illustré à la figure 11C, au moins un premier retrait de matière 721 de la première nervure 72 s'étend sur toute une dimension transversale de ladite nervure 72 ; corrélativement, chaque deuxième ergot 121 peut s'étendre depuis le pourtour extérieur de la couche de diffusion gazeuse 120 sur une distance égale à la dimension transversale de la nervure 72.

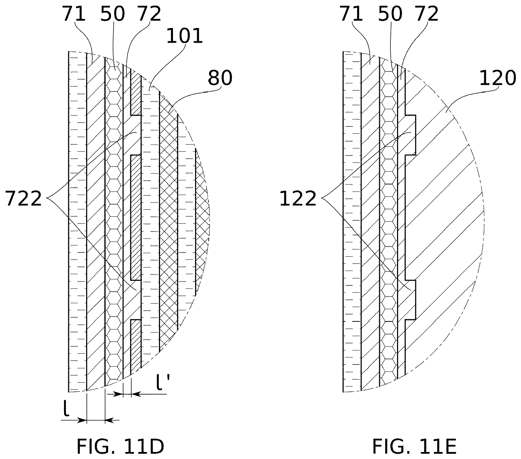

Selon un autre exemple, illustré aux figures 11D et 11E, la nervure 72 comprend des premiers ergots 722 dont la forme et les dimensions les prédestinent à coopérer avec autant de retraits de matière 122, appelés deuxièmes retraits de matière, ouverts vers l'extérieur de la couche de diffusion gazeuse 120.

En référence à la figure 11D, les premières nervures 71 et 72, et en particulier ici la première nervure 72 délimitant le pourtour intérieur de la zone d'intérêt principale 1100, étant de préférence déposée par impression, et encore plus préférentiellement par sérigraphie, l'on comprend qu'au moins :
- les largeurs *l* et *l'* des premières nervures 71 et 72, et en particulier la largeur l' de la première nervure 72 intérieure,
- le rapport de ces largeurs *l* et *l'* entre elles et
- les dimensions des retraits de matière ou des ergots de la première nervure 72,
s'inscri(ven)t dans une gamme de valeurs compatibles avec la technique d'impression utilisée, en prenant en compte le cas échéant l'épaisseur souhaitée des nervures imprimées et leur maintien mécanique, notamment au regard de leur fonction de soutien mécanique du joint d'étanchéité 50 lors de l'assemblage du réacteur électrochimique. Ceci doit, le cas échéant, également être vérifié pour l'exemple illustré sur la figure 11C.

L'on comprend au vu de ce qui précède que l'indentation de la nervure 72 intérieure peut être réalisée par les premiers retraits de matière 721 ou par les premiers ergots 722 (indentation négative ou indentation positive), voire selon un mode mixte, notamment selon la relation d'ordre reliant la dimension transversale *l* de la nervure 71 extérieure et la dimension transversale *l'* de la nervure 72 intérieure, telles qu'illustrées sur les figures 11A et 11D.

Dans chaque cas, l'indentation de la nervure 72 intérieure peut induire une variation de la section du canal d'écoulement adjacent à la nervure 72 intérieure. Ceci peut être souhaité, notamment de sorte à structurer au moins en partie le guide d'écoulement 1. Au contraire, ceci peut ne pas être souhaité ; or rien n'impose que le canal le plus proche de la nervure 72 intérieure indentée la jouxte directement. En alternative, d'autres premières nervures 71 et 72 et un autre joint d'étanchéité 50 pourraient être prévues qui seraient destinées à étanchéifier une zone d'intérêt réduite ou intérieure relativement à la zone d'intérêt principale 1100 délimitée par les premières nervures comprenant la nervure 72 intérieure indentée. Ainsi, une double étanchéification serait obtenue, et ce, le cas échéant, en plus du maintien, voire du collage, de la couche de diffusion gazeuse 120 (Cf. infra). Une telle éventualité a déjà été envisagée plus haut.

Notons également que les premiers retraits de matière 721 peuvent s'étendre sur toute l'épaisseur de la nervure 72 intérieure ou seulement sur une portion supérieure de cette épaisseur. Cette deuxième alternative étant illustrée sur la figure 10A, où ladite portion supérieure s'étend plus particulièrement sur une distance sensiblement égale à l'épaisseur de la couche de diffusion gazeuse 120.

Il est à noter, par ailleurs, qu'il n'est pas exclu que les deuxièmes ergots 122 de la couche de diffusion gazeuse 120 s'étendent également hors du plan principal d'extension de la couche de diffusion gazeuse 120, notamment pour venir compléter entièrement les premiers retraits de matière 721 lorsque ces derniers s'étendent sur toute l'épaisseur de la nervure 72 intérieure ou sur une épaisseur de cette nervure supérieure à l'épaisseur de la partie plane de la couche de diffusion gazeuse 120.

Les différents ergots et/ou retraits de matière agissent alors comme des détrompeurs et leur coopération permet d'améliorer le maintien mécanique de la couche de diffusion gazeuse 120.

Dans le cas où la nervure 72 intérieure comprend au moins un retrait de matière 721 s'étendant sur toute la largeur de la nervure 72, la couche de diffusion gazeuse 120 est préférentiellement positionnée sur le substrat 10 avant le moulage du joint d'étanchéité 50. En outre, la couche de diffusion gazeuse 120 se trouve ainsi solidarisée, par exemple collée, au substrat 10 par l'extrémité de ses ergots 121, comme illustré sur la figure 11C.

Notons ici, pour clore la description des modes de réalisation illustrés sur les figures 11A à 11E, que, en alternatives moins préférentielle :
- la couche de diffusion gazeuse 120 peut présenter sur tout son pourtour inférieur, destiné à être orienté vers le substrat 10, un retrait de matière, de préférence configuré pour coopérer avec un retrait de matière, par exemple correspondant, du pourtour intérieur de la nervure intérieure 72, ou
- la nervure intérieure 72 peut présenter, sur tout son pourtour intérieur, un retrait de matière, de préférence configuré pour coopérer avec un retrait de matière, par exemple correspondant, du pourtour inférieur de la couche de diffusion gazeuse 120, destiné à être orienté vers le substrat 10.

Dans ces modes de réalisation alternatifs, si la fonction de détrompeur est potentiellement dégradée relativement aux modes de réalisation illustrés sur les figures 11A à 11E, il reste qu'une fonction de centrage de la couche de diffusion gazeuse 120 relativement à la nervure intérieure 72 est avantageusement assurée.

Un exemple de procédé de fabrication va maintenant être décrit en référence aux figures 9A et 9B. Ce procédé permet d'obtenir la structure illustrée en figure 9B.

Le procédé comprend tout d'abord les étapes suivantes :
- fournir :
   i. un substrat 10 comprenant une première face 101 sur laquelle au moins un premier guide d'écoulement 1 a été formé, comme illustré sur la figure 9A, ou est destiné à être formé, ou
   ii. un substrat 10 comprenant une première face 101 destinée à être mise en regard d'au moins un premier guide d'écoulement 1 d'une plaque 20 pour réacteur électrochimique,
- déposer, sur la première face 101 du substrat 10, autour d'au moins une zone d'intérêt 1000, destinée à être étanchéifiée, au moins deux premières nervures 71 et 72 configurées pour former, entre elles, au moins une gorge 40, comme illustré sur la figure 9A.

Le dépôt des premières nervures 71 et 72 peut avantageusement être réalisé par impression par sérigraphie. La géométrie des premières nervures pouvant être assez complexe, cette technique de dépôt est avantageuse car elle permet d'atteindre une résolution élevée et donc une plus grande liberté dans les motifs à imprimer relativement à d'autres techniques de dépôt.

Préférentiellement, on prévoit, suite à l'étape de dépôt des premières nervures 71 et 72 et en particulier si les premières nervures sont à base d'une résine thermodurcissable ou d'une encre solvatée, une étape de réticulation et/ou une étape de séchage de ces mêmes premières nervures 71 et 72.

Le procédé comprend en outre une étape de dépôt, dans chaque gorge 40, d'une couche à base d'un matériau d'étanchéité. Ce dépôt est de préférence effectué de sorte que cette couche présente une épaisseur strictement supérieure aux épaisseurs des premières nervures 71 et 72. Cette étape permet de former un joint d'étanchéité 50, tel que décrit ci-dessus, épousant la forme de la gorge 40 dans laquelle il s'étend et présentant une épaisseur strictement supérieure à celles des premières nervures 71 et 72.

Plusieurs méthodes de dépôt sont envisageables pour la formation de la couche à base du matériau d'étanchéité. Par exemple, il est possible de réaliser cette couche par dispense, par sérigraphie ou par pulvérisation.

Préférentiellement, les premières nervures 71 et 72 ne sont pas retirées après le dépôt du joint d'étanchéité 50 dans la gorge 40. Les premières nervures 71 et 72 permettent en effet d'assurer un maintien mécanique du joint d'étanchéité 50 lors d'un assemblage subséquent du substrat 10, avec notamment une couche de diffusion gazeuse 120 et, le cas échéant un AME 140 et son renfort 141.

A titre non limitatif, le procédé selon l'invention présente l'avantage de permettre de fabriquer le joint d'étanchéité 50 en un seul dépôt, ce qui évite la présence d'interfaces entre dépôts distincts, ces interfaces pouvant être nuisibles à l'étanchéité.

Préférentiellement, le joint d'étanchéité 50 est déposé par sérigraphie au pochoir ou « stencil » selon la terminologie anglo-saxonne. Cette méthode permet d'assurer une hauteur de dépôt strictement supérieur aux nervures 71 et 72. En effet, le pochoir ou l'écran « stencil » reposant sur les nervures 71 et 72 lors de l'impression, une surépaisseur est forcément déposée. Celle-ci correspond à l'épaisseur intrinsèque du pochoir.

L'épaisseur de l'écran stencil est alors astucieusement choisi pour pouvoir obtenir une épaisseur finale du joint d'étanchéité 50 allant de 105 à 130% de l'épaisseur des deux premières nervures.

Ce procédé présente donc un avantage par rapport à d'autres procédés comme la pulvérisation ou la dispense car il permet de mieux contrôler la surépaisseur déposée.

A noter qu'ici la sérigraphie de type mesh est difficilement réalisable. En effet, elle suppose en effet que l'écran soit maintenu au-dessus de la surface à imprimer, et donc espacé de cette surface, dans une configuration dite « hors contact ». Cet espacement lors de l'impression, que ne requiert pas un écran stencil, rend difficile une impression dans la gorge 40, vu la profondeur de la gorge 40 créée par les premières nervures 71 et 72.

Le procédé selon l'invention présente également l'avantage d'être compatible avec une impression simultanée d'une partie au moins de la zone d'homogénéisation, voire de la zone active. En effet, les premières nervures 71 et 72 peuvent par exemple être fabriquées dans le même matériau et en même temps que des dents 80 ou 80' du guide d'écoulement 1 situées en zone d'homogénéisation 3000, voire en zone active 2000. Ceci est jugé distinguer avantageusement le procédé d'étanchéification selon un mode de réalisation du troisième aspect de l'invention des procédés de l'art antérieur qui ne peuvent être mis en oeuvre qu'après la fabrication de la zone d'homogénéisation et de la zone active.

Un autre aspect de l'invention concerne un procédé de fabrication une plaque bipolaire pour réacteur électrochimique ou même d'un réacteur électrochimique comprenant la mise en oeuvre du procédé de fabrication d'un joint d'étanchéité selon l'un quelconque des modes de réalisation décrits ci-dessus.

Dans l'exemple illustré sur les figures 14 et 15, en allant de bas en haut de chacune des deux figures, un premier substrat 10 selon le mode de réalisation illustré sur la figure 10A a été fabriqué qui est amené en vis-à-vis d'un autre substrat selon le premier aspect de l'invention qui combine les modes de réalisation illustrés sur la figure 10A et la figure 10B.

Cet autre substrat est, par une de ses faces, conforme au mode de réalisation illustré sur la figure 10A et, par l'autre de ses faces, conforme à l'exemple illustré sur la figure 10B. Il est ainsi, non seulement conforme au premier aspect de l'invention selon son acceptation la plus large, mais il comprend en outre, sur sa deuxième face, opposée à sa première face, un deuxième guide d'écoulement 1', un deuxième joint d'étanchéité 50 autour d'une zone d'intérêt 1000 de la deuxième face qui est destinée à être étanchéifiée et deux deuxièmes nervures 71 et 72 configurées de sorte à former au moins une gorge dans laquelle le deuxième joint d'étanchéité 50 s'étend. Le deuxième joint d'étanchéité 50 présente une épaisseur strictement supérieure aux épaisseurs des deuxièmes nervures 71 et 72.

Le premier substrat 10 et ledit autre substrat 10 selon des modes de réalisation différents du premier aspect de l'invention peuvent être assemblés l'un à l'autre de la façon illustrée sur la figure 15 pour former une plaque bipolaire 100 telle qu'illustrée sur la figure 3.

En outre, cet assemblage peut impliquer de part et d'autre de la plaque bipolaire 100, une GDL 120, une AME 140 et un renfort d'AME 141, comme illustré sur la figure 14, pour obtenir, comme illustré sur la figure 15, une cellule 500 de réacteur électrochimique.

Un autre aspect de l'invention concerne donc une plaque bipolaire 100, notamment destinée à une application PEM, et un réacteur électrochimique comprenant au moins une cellule 500.

La plaque bipolaire peut être fabriquée par mises en oeuvre de l'un quelconque des modes de réalisation décrits ci-dessus du procédé de fabrication d'un joint d'étanchéité 50, notamment sur des faces opposées entre elles d'un même substrat 10. En effet, la fabrication d'une plaque bipolaire 100 selon l'invention peut comprendre tout d'abord la mise en oeuvre d'un quelconque des modes de réalisation décrits plus haut pour obtenir au moins un premier joint d'étanchéité 50 entourant un premier guide d'écoulement 1 sur une première face 101 d'un substrat 10, puis la mise en oeuvre d'un quelconque des modes de réalisation décrits ci-dessus pour obtenir au moins un deuxième joint d'étanchéité 50 entourant un deuxième guide d'écoulement 1' sur la seconde face 102 du substrat 10 et/ou sur une face d'un autre substrat. Le cas échéant, il peut consister ensuite à assembler entre eux la pluralité de guides d'écoulement 1 et 1' entourés des joints d'étanchéité 50 ainsi fabriqués.

La figure 15 illustre ainsi une plaque bipolaire 100, formée par la superposition de guides d'écoulement 1, 1' et 1 ° pouvant chacun être entouré d'au moins un joint d'étanchéité 50 obtenu par mise en oeuvre de l'un quelconque des modes de réalisation décrits ci-dessus. Dans cet exemple, trois guides d'écoulement 1 et 1' sont fabriqués à partir de deux substrats. Le guide 1 supérieur présente des dents 80 en saillie depuis la face supérieure d'un premier des deux substrats. Le guide intermédiaire 1' présente des dents 80' en saillie depuis la face inférieure du premier substrat. Et le troisième guide d'écoulement 1 inférieur présente des dents 80 en saillie depuis la face supérieure du second des deux substrats. Lorsque ces trois guides sont superposées, des canaux d'écoulement d'un réactif sont ménagés entre les dents 80 du guide supérieur 1 et du guide inférieur 1, et des canaux d'écoulement d'un liquide caloporteur sont ménagés entre les dents 80' du guide intermédiaire 1'.

L'invention n'est pas limitée aux modes de réalisation précédemment décrits.

La présente invention peut être appliquée à tout type de réacteurs électrochimiques nécessitant au moins un circuit fluidique, notamment pour l'amenée des réactifs et l'évacuation des produits de la réaction et/ou la circulation d'un fluide de refroidissement. Parmi ces réacteurs électrochimiques, l'on compte non seulement des piles à combustible, comme déjà mentionné plus haut, mais également, à titre d'exemple additionnel, des électrolyseurs.

Notons enfin que la présente invention permet la fabrication de joint d'étanchéités 50 compatibles avec des guides d'écoulement présentant des canaux fins, c'est-à-dire de largeur de dents 80, 80' inférieure à 400 µm, qui ne sont pas réalisables en séries par emboutissage.

## Revendications

1. Procédé de fabrication d'au moins un joint d'étanchéité 50 pour réacteur électrochimique, comprenant les étapes suivantes :
• fournir un substrat (10) comprenant une première face (101) sur laquelle s'étend, ou est destiné à s'étendre, au moins un premier guide d'écoulement (1) ou un substrat (10) comprenant une première face (101) destinée à être mise en regard d'au moins un premier guide d'écoulement (1) d'une plaque (20) pour réacteur électrochimique,
• déposer par sérigraphie, sur la première face (101) du substrat (10), autour d'au moins une zone, dite zone d'intérêt (1000), destinée à être étanchéifiée, au moins deux premières nervures (71,72) configurées pour former, entre elles, au moins une gorge (40), puis
• déposer par sérigraphie, dans chaque gorge (40), une couche à base d'un matériau d'étanchéité, de sorte que ladite couche présente une épaisseur strictement supérieure à une épaisseur des premières nervures (71,72),
de sorte à former au moins un joint d'étanchéité (50) épousant la forme de la gorge (40) dans laquelle il s'étend et présentant une épaisseur strictement supérieure à celles des premières nervures (71,72).

2. Procédé selon la revendication précédente, dans lequel le matériau d'étanchéité est à base de l'un au moins parmi : une résine époxy, le silicone, un polyuréthane, le caoutchouc nitrile, un fluorocarbone et l'éthylène-propylène-diène monomère.

3. Procédé l'une quelconque des revendications 1 et 2, dans lequel le dépôt de la couche à base d'un matériau d'étanchéité est réalisé par sérigraphie au pochoir.

4. Procédé l'une quelconque des revendications 1 à 3, dans lequel, le premier guide d'écoulement (1) étant destiné à guider l'écoulement d'un réactif du réacteur électrochimique, le dépôt de la nervure (72) qui, parmi les deux premières nervures (71,72), délimite un pourtour intérieur d'une zone d'une zone d'intérêt (1000) sur laquelle s'étend, ou est destiné à s'étendre, le premier guide d'écoulement (1), ou en vis-à-vis de laquelle est destiné à s'étendre le premier guide d'écoulement (1), comprend des premiers retraits de matière (721) ouverts vers ladite zone d'intérêt (1000) et/ou des premiers ergots (722) s'étendant vers ladite zone d'intérêt (1000), chaque premier retrait de matière (721) et chaque premier ergot (722) étant d'une forme et de dimensions les prédestinant à coopérer étroitement avec un deuxième ergot (121) et un deuxième retrait de matière (122) d'une couche de diffusion gazeuse (120) destinée à venir en regard d'au moins une partie de la première face (101) du substrat (10) de sorte à contacter ledit au moins un premier guide d'écoulement (1), respectivement, chaque deuxième ergot (121) s'étendant depuis un pourtour extérieur de la couche de diffusion gazeuse (120) et chaque deuxième retrait de matière (122) étant ouvert vers l'extérieur de la couche de diffusion gazeuse (120).

5. Procédé l'une quelconque des revendications 1 à 4, dans lequel, le dépôt desdites au moins deux premières nervures (71,72) comprend au moins une étape d'impression par sérigraphie desdites premières nervures (71,72), une partie d'un procédé de fabrication du premier guide d'écoulement (1) étant concomitante à ladite au moins une étape d'impression par sérigraphie desdites premières nervures (71,72) et étant mise en oeuvre par sérigraphie à l'aide d'un même écran maillé.

6. Procédé de fabrication d'une plaque bipolaire (100) pour réacteur électrochimique ou d'un réacteur électrochimique comprenant la mise en oeuvre du procédé de fabrication d'au moins un joint d'étanchéité (50) selon l'une quelconque des revendications 1 à 5.

7. Procédé de fabrication d'un réacteur électrochimique selon la revendication précédente, comprenant, après la formation du joint d'étanchéité (50), les étapes suivantes, le premier guide d'écoulement (1) étant destiné à guider l'écoulement d'un réactif du réacteur électrochimique :
• Fournir une couche de diffusion gazeuse (120), un assemblage membrane-électrodes (140) et un renfort (141) associé audit assemblage membrane-électrodes,
• Reporter la couche de diffusion gazeuse (120) sur une zone du premier guide d'écoulement destinée à former une zone active (2000) du réacteur électrochimique,
• Reporter l'assemblage membrane-électrodes (140) sur la couche de diffusion gazeuse (120),
• Reporter le renfort (141) de l'assemblage membrane-électrodes (140) sur une zone de la première face (101) du substrat (10) destinée à former au moins une zone d'homogénéisation (3000) du réacteur électrochimique, voire également une zone périphérique (4000) du réacteur électrochimique, de sorte à couvrir un pourtour extérieur de l'assemblage membrane-électrodes (140) et à venir en vis-à-vis du joint d'étanchéité (50), et
• Coller le renfort (141) de l'assemblage membrane-électrodes (140) et le joint d'étanchéité (50) entre eux par pressage à chaud,
de sorte que la couche de diffusion gazeuse (120) et l'assemblage membrane-électrodes (140) se trouvent comprimés dans un espace étanchéifié par le joint d'étanchéité (50).

8. Substrat (10) comprenant une première face (101) sur laquelle s'étend, ou est destiné à s'étendre, un premier guide d'écoulement (1) pour réacteur électrochimique ou substrat (10) comprenant une première face (101) destinée à être mise en regard d'un premier guide d'écoulement (1) d'une plaque (20) pour réacteur électrochimique, le substrat (10) comprenant, sur la première face (101), au moins un joint d'étanchéité (50) autour d'au moins une zone dite zone d'intérêt (1000) de la première face qui est destinée à être étanchéifiée, le substrat (10) étant **caractérisé en ce qu'**il comprend en outre, sur la première face (101), au moins deux premières nervures (71,72) configurées de sorte à former au moins une gorge (40) dans laquelle ledit au moins un joint d'étanchéité (50) s'étend, ledit joint d'étanchéité (50) présentant une épaisseur strictement supérieure aux épaisseurs des premières nervures (71,72).

9. Substrat (10) selon la revendication 8, dans lequel la zone d'intérêt (1000) comprend au moins une zone d'intérêt dite principale (1100) sur laquelle s'étend ou est destiné à s'étendre, ou en vis-à-vis de laquelle est destiné à s'étendre, le premier guide d'écoulement (1).

10. Substrat (10) selon l'une quelconque des revendications 8 et 9, dans lequel, le premier guide d'écoulement (1) comprenant des dents (80 ou 80') s'étendant, ou étant destinées à s'étendre, sur une partie de la première face (101) du substrat (10), ou destinées à s'étendre en vis-à-vis d'une partie de la première face (101) du substrat (10), les épaisseurs des premières nervures (71 et 72) sont inférieures à une épaisseur des dents (80') du premier guide d'écoulement (1) ou à la somme d'une épaisseur des dents (80) du premier guide d'écoulement (1) et d'une épaisseur d'une couche de diffusion gazeuse (120) destinée à venir en regard d'au moins une partie de la première face (101) du substrat (10) de sorte à contacter des sommets (81) des dents (80) du premier guide d'écoulement.

11. Substrat (10) selon l'une quelconque des revendications 8 à 10, dans lequel, le premier guide d'écoulement (1) étant destiné à guider l'écoulement d'un réactif du réacteur électrochimique, les épaisseurs des premières nervures (71,72) sont au plus sensiblement égales à la somme d'une épaisseur des dents (80) du premier guide d'écoulement (1) et d'une épaisseur d'une couche de diffusion gazeuse (120) destinée à venir en regard d'une partie de la première face (101) du substrat (10) de sorte à contacter des sommets (81) des dents (80) du premier guide d'écoulement (1).

12. Substrat (10) selon l'une quelconque des revendications 8 à 11, dans lequel, le premier guide d'écoulement (1) étant destiné à guider l'écoulement d'un fluide de refroidissement du réacteur électrochimique, les épaisseurs des premières nervures (71,72) sont au plus sensiblement égales à une épaisseur des dents (80') du premier guide d'écoulement (1).

13. Substrat (10) selon l'une quelconque des revendications 8 à 12, dans lequel une dimension transversale de chaque gorge (40) entre deux premières nervures (71,72) est comprise entre 0,5 mm et 3 mm, de préférence entre 0,5 mm et 1,5 mm.

14. Substrat 10 selon l'une quelconque des revendications 8 à 13, dans lequel les premières nervures (71,72) est à base de l'un au moins parmi : une résine thermodurcissable, telle que le polychlorure de vinyle ou un polyamide ou un polyépoxyde, et un thermoplastique, tel que le polyuréthane ou le polypropylène ou le poly(fluorure de vinylidène).

15. Substrat (10) selon l'une quelconque des revendications 8 à 14, dans lequel le joint d'étanchéité (50) présente une épaisseur inférieure ou égale à 120% des épaisseurs des premières nervures (71 et 72).

16. Substrat (10) selon l'une quelconque des revendications 8 à 15, dans lequel le premier guide d'écoulement (1) étant destiné à guider l'écoulement d'un réactif du réacteur électrochimique et dans lequel la nervure (72) qui, parmi les deux premières nervures (71,72), délimite un pourtour intérieur d'une zone d'intérêt (1000) sur laquelle s'étend le premier guide d'écoulement (1) ou en vis-à-vis de laquelle est destiné à s'étendre le premier guide d'écoulement (1) comprend des premiers retraits de matière (721) ouverts vers ladite zone d'intérêt (1000) et/ou des premiers ergots (722) s'étendant vers ladite zone d'intérêt (1000), chaque premier retrait de matière (721) et chaque premier ergot (722) étant d'une forme et de dimensions les prédestinant à coopérer étroitement avec un deuxième ergot (121) et un deuxième retrait de matière (122), respectivement, chaque deuxième ergot (121) s'étendant depuis un pourtour extérieur d'une couche de diffusion gazeuse (120) ou chaque deuxième retrait de matière (122) étant ouvert vers l'extérieur d'une couche de diffusion gazeuse (120), la couche de diffusion gazeuse (120) étant destinée à venir en regard d'au moins une partie de la première face (101) du substrat (10), de sorte à contacter ledit au moins un premier guide d'écoulement (1).

17. Plaque bipolaire (100) pour réacteur électrochimique, et en particulier pour pile à combustible à membrane échangeuse de protons, comprenant un substrat (10) selon l'une des revendications 8 à 16.

18. Réacteur électrochimique comprenant un substrat (10) selon l'une des revendications 8 à 16 ou une plaque bipolaire (100) selon la revendication précédente.
